# EUROPEAN PATENT SPECIFICATION

(11) **EP 3 782 401 B1**
(45) Date of publication and mention of the grant of the patent: **16.02.2022**
(21) Application number: 18724172.4
(22) Date of filing: 03.05.2018
(51) Int. Cl.: H04W 28/02, H04L 12/851, H04W 76/15, H04W 76/12

(54) **CLIENT DEVICE, NETWORK CONTROL NODE AND UPF FOR TRANSMISSION AND RECEPTION OF STREAMS OF DATA PACKETS IN MULTI-CONNECTIVITY**
CLIENT-VORRICHTUNG, NETZWERKSTEUERUNGSKNOTEN UND UPF ZUM SENDEN UND EMPFANGEN VON STRÖMEN VON DATENPAKETEN IN MULTIKONNEKTIVITÄT
DISPOSITIF CLIENT, NOEUD DE COMMANDE DE RESEAU ET UPF POUR LA TRANSMISSION ET LA RECEPTION DE FLUX DE PAQUETS DE DONNEES EN MULTICONNECTIVITE

(43) Date of publication of application: 24.02.2021
(73) Proprietor: HUAWEI TECHNOLOGIES CO., LTD., Shenzhen, Guangdong 518129 (CN)
(72) Inventor: CONSOLI, Antonio, 16440 Kista (SE); DEVLIC, Alisa, 16440 Kista (SE)
(74) Representative: Gill Jennings & Every LLP
(86) International application number: PCT/EP2018/061434
(87) International publication number: WO 2019/210966

(56) References cited:
- EP-B1- 2 668 754
- GB-A- 2 386 282
- "3rd Generation Partnership Project; Technical Specification Group Services and System Aspects; Procedures for the 5G System; Stage 2 (Release 15)", 3GPP STANDARD; TECHNICAL SPECIFICATION; 3GPP TS 23.502, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V15.1.0, 27 March 2018 (2018-03-27), pages 1-285, XP051450527, [retrieved on 2018-03-27]
- "3rd Generation Partnership Project; Technical Specification Group Services and System Aspects; System Architecture for the 5G System; Stage 2 (Release 15)", 3GPP STANDARD; TECHNICAL SPECIFICATION; 3GPP TS 23.501, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V15.1.0, 28 March 2018 (2018-03-28), pages 1-201, XP051450586, [retrieved on 2018-03-28]

## Description

### Technical Field

The disclosure relates to a client device, a network control node and a user plane function, UPF. Furthermore, the disclosure also relates to corresponding methods and a computer program.

### Background

The future 5G mobile network is required to support a variety of new 5G services that can have demanding performance requirements, such as large guaranteed flow bitrate or high IP flow reliability, which cannot be provided by the existing mobile networks and currently defined quality of service, QoS framework over a single radio link. To solve the problem of providing a large flow bitrate to mobile services, 5G Multi-RAT Dual Connectivity (MR-DC) has been introduced and standardized that enables two radio network nodes to provide radio resources to a given user equipment (UE), thus providing aggregated network bandwidth and increasing per user throughput.

In MR-DC with 5G control plane a single user plane function (UPF) handles user plane connections on N3 interface and a single N2 termination to access and mobility function (AMF) exists. The radio access node (RAN) in which N2 interface terminates is called Master RAN node (MN). When two N3 tunnel terminations at RAN exist for a given packet data unit (PDU) session (to the same UPF), MR-DC provides the possibility to direct the downlink (DL) user plane traffic of some quality of service (QoS) flows of the PDU session to the Secondary RAN node (SN), while the remaining QoS flows of the PDU session are directed to the MN (and vice versa). Different IP streams requiring different QoS characteristics are mapped to different QoS flows, such that e.g. a video stream is mapped to QFI 1, an audio flow is mapped to QFI 2, and a data stream is mapped to QFI 3.

5G QoS framework defines QoS flow as the finest granularity of QoS differentiation in the PDU session. Each QoS flow is assigned its identifier QFI (QoS Flow Identifier) by SMF, a marking for a set of UL/DL packets receiving the same traffic forwarding treatment. The user plane traffic (application's IP streams) are mapped to QoS flows in UL and DL by UE and UPF, respectively, using QoS rules and service data flow (SDF) templates. The UPF classifies the incoming data packets using SDF template, a 5-tuple defined as <source IP address, destination IP address, source port number, destination port number, and protocol ID> to identify QoS of their flows, and adds a unique QFI in the encapsulation header of the PDUs. It then transmits PDUs of the QoS flow belonging to the PDU session in a single tunnel between 5G core network and RAN. Therefore, there is 1:1 mapping between IP streams and QoS flows. Similarly at the UE side, UE uses the stored QoS rules (packet filters for detecting traffic with the corresponding QoS treatment of QoS flows) to map UL packets to QoS flows, applies QFI marking on UL PDUs, and transmits them using access specific resources for the QoS flow based on mapping provided by RAN.

RAN allows splitting of a QoS flow across Master and Secondary RAN nodes in order to use resources on the two air interfaces. Such solution is referred to as MR-DC with single N3 termination to Master RAN node (RAN split bearer). In this case there is a single N3 termination to UPF. In the example, QFI 1 is split over 2 bearers on the 2 air interfaces (QFI 1a and QFI 1b) via their interconnection interface (Xn-U).

3GPP launched a study in TR 23.793 on how to extend the 5G System to support Access Traffic Steering, Switching and Splitting (ATSSS) between 3GPP and non-3GPP access networks (i.e., WLAN and fixed access) using multi access PDU sessions. ATSSS framework will create access traffic policies to control the behaviour of ATSSS traffic (based on application-specific information provided by AF, access information provided by AMF, user's subscription and profile information from UDR and network local policy) and will enforce these policies in all PDU sessions between UE and 5GC. It will enable splitting the traffic of a data flow between 3GPP and non-3GPP accesses by enforcing the policy rules at UPF and UE for UPF- or UE-initiated traffic, respectively. The ATSSS initial architecture framework reuses existing interfaces standardized in and extends the UE and the existing network functions (UPF, SMF, PCF, UDM) with new functionalities.

From the protocol perspective there have been different proposals on which protocol stack layer to integrate multiple RATs, enabling a UE to receive or transmit data flows via different links (from the same or different RATs):
- Using RLC/MAC (Medium Access Control) as aggregation layer on top of different PHY layers, which enables faster switching between the lags, but is applicable for collocated nodes or nodes with ideal backhaul.
- Using PDCP (Packet Data Convergence Protocol) as aggregation layer on top of multiple RLC/MAC/PHY layers which is suitable for the tight interworking between 5G NR and evolved LTE (i.e., high performing inter-RAT mobility and aggregation of data flows), as well as for non-collocated nodes and nodes with non-ideal backhaul.
- Using a multi-path protocol above TCP, such as MPTCP.
- Defining a new user plane protocol below IP that sits on top of UE and user plane function.

The choice between RLC/MAC and PDCP layer depends on the level of integration between different RATs and the legacy technologies (e.g., LTE). The MAC and PDCP integration solutions are transparent to core network, enabling user mobility across different RATs without notifying core network. MPTCP can create multiple TCP/IP sessions over different access interfaces in the mobile network, adding them as sub-flows to MPTCP session.

Publication titled, "3rd Generation Partnership Project; Technical Specification Group Services and System Aspects; Procedures for the 5G System; Stage 2 (Release 15)", 3GPP STANDARD; TECHNICAL SPECIFICATION; 3GPP TS 23.502, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V15.1.0, 27 March 2018 relates to procedures for the 5G system.

GB2386282 relates to allocating shared resources in a packet data communications network.

### Summary

An objective of implementations of the disclosure is to provide a solution which mitigates or solves the drawbacks and problems of conventional solutions.

The invention has been defined in the independent claims. Further specific technical features have been defined in the dependent claims.

According to the invention the above mentioned and other objectives are achieved with a client device for a mobile communication system, the client device being configured to
receive a first application request from an application, wherein the first application request indicates a request to establish a packet data unit, PDU, session for transmission of streams of data packets;
receive a set of Quality-of-Service, QoS, requirements associated with the streams of data packets, wherein the set of QoS requirements is received from the application (110);
transmit a request to establish a PDU session to a network control node upon reception of the first application request so as to establish a PDU session served by a user plane function, UPF, wherein the established PDU session carries a first set of QoS flows for the streams of data packets; and when the first set of QoS flows meets the set of QoS requirements the client device is configured to
transmit the streams of data packets to the UPF in the first set of QoS flows over the established PDU session via a first communication link comprising a first radio link and a first backhaul link and at least one second communication link comprising a second radio link and a second backhaul link.

The QoS requirements can be understood as a set of IP streams required to be set up with specified QoS flows characteristics between the client device and a data network (via the UPF) or between the client device and another client device. The QoS requirements can be specified by the application or the Policy Control Function (PCF), but it is the application that decides if the QoS flows characteristics in the established PDU session (which may be not exactly matching the QoS requirements in the first set) are good enough for transmitting and receiving the streams of data packets. QoS parameters that control specific QoS forwarding behavior of a 5G QoS flow, referred to as 5G QoS Indicator or 5QI, include: Resource Type (GBR, delay critical GBR or non-GBR), Priority level, Packet Delay Budget, Packet Error Rate, and Averaging Window (defined only for GBR flows). Other QoS parameters that characterize a GBR (or delay critical GBR) QoS flow are: an Allocation and Retention priority (ARP), Guaranteed Flow Bit Rate (GFBR) and Maximum Flow Bit Rate (MFBR).

An advantage of the client device according to the first aspect is that it enhances QoS framework in mobile communication systems, such as 5G, by dynamic and more efficient utilization of network infrastructure and available bandwidth to provide large guaranteed IP flow bitrate and meet other application-specific QoS requirements, e.g., high reliability. Since the application knows how to achieve desired QoS/QoE, implementations of the disclosure expose the performance information of available network paths and information about QoS fulfillment to the application to dynamically adjust QoS requirements and allocate available resources to its traffic data streams. By exposing network performance information of available paths and changes in QoS fulfillment to application developers and letting the application define how to allocate resources for its traffic according to application specific criteria the use of mobile core network and 5G QoS framework for mobile services data transfer can be increased and monetized compared to conventional solutions, especially for new mobile services and verticals.

In this aspect, the set of QoS requirements is received from the application.

An advantage with this implementation form is that the application can provide a set of QoS requirements associated with the streams of data packets to the client device before establishing a PDU session, so that the client device can check if the QoS flows that are setup in the established PDU session can meet these QoS requirements or not, and adjust the protocol behaviour accordingly.

Further, according to the invention, the client device is further configured to
obtain access network, AN, performance measurements and backhaul performance measurements when the first set of QoS flows does not meet the set of QoS requirements;
check whether the set of QoS requirements can be fulfilled by available aggregated resources on the first communication link and the at least one second communication link based on the AN performance measurements and the backhaul performance measurements;
transmit a request for mapping to the application when the set of QoS requirements can be fulfilled by the available aggregated resources, wherein the request for mapping comprises the AN performance measurements and the backhaul performance measurements.

The aggregated resources refer to network resources on two or more communication links (e.g. bandwidth and packet error rate), that can be used to increase the available bandwidth by sending packets on multiple communication links or to reduce the packet error rate by duplicating packets on multiple communication links in order to implement the redundancy mechanism. Since the default 5G QoS framework allows to map one QoS flow to one communication link, this is not possible without the present solution.

An advantage with this implementation form is that when 5G QoS framework fails to provide the requested QoS to the end user (such as very large Guaranteed Flow Bit Rate (GFBR) or low Packet Error Rate (PER)), because the requested QoS cannot be achieved on a QoS flow on a single communication path, the present protocol (5GUP) provides a solution that enables aggregating the network resources of multiple available communication paths and provisioning QoS flows on these paths, as specified by the application, to meet the requested QoS associated to the stream of data packet. The client device obtains and exposes the AN performance measurements and backhaul performance measurements of available communication paths and checks whether the requested QoS could be provided by aggregating the network resources of multiple paths, e.g., by splitting a large stream of data packets to QoS flows among multiple communication links in order to achieve the needed GFBR or duplicating the packets of stream of data packets across multiple QoS flows to achieve a lower PER. It asks the application to specify how to perform the mapping of streams of data packets to QoS flows on available communication paths, after exposing to it the network paths performance information.

In an implementation form of a client device according to the first aspect, the client device is further configured to
transmit in-band control information associated with the established PDU session to the UPF.

The in-band control information can be understood as the data that regulates protocol behaviour, such as 5GUP protocol (see detailed description). The in-band control information for 5GUP protocol also allows the transport of performance measurements between UE and UPF and synchronizes its state at both protocol entities, which is sent in the same established PDU session as the user data, however unlike the user data it is not forwarded to data network (i.e., it is meant to be used by the UPF and the client device). The 5GUPprotocol may allocate a dedicated QoS flow on each available communication path in the established PDU session for transfer of the in-band control information between the client device and the UPF. The in-band control information can convey the following signals and data to the UPF: to start, stop, pause or resume sending and receiving the streams of data packets to the client device and from the data network; to receive and apply the mapping (or inverse of this mapping) of the streams of data packets to the first or second set of QoS flows; or to receive RAN performance measurements from the client device, obtain backhaul performance measurements and send these backhaul performance measurements to the client device. The client device receives the backhaul performance measurements also as part of the in-band control information from the UPF.

An advantage with this implementation form is that there is no need to set up and maintain separate signalling mechanism in the control plane of the mobile communication system. Further, the in-band control can react faster upon receiving application requests by triggering specific protocol actions. The in-band control information also enables the client device to be aware of mobile network conditions on the available paths, so that it can inform the application on time to dynamically adapt to changes in network conditions. Another advantage is that with in-band control information the real time monitoring of the QoS characteristics of links (of the radio and the backhaul link) becomes possible both at the application and at the UPF.

In an implementation form of a client device according to the first aspect, the client device is further configured to
receive the streams of data packets in the first set of QoS flows from the UPF over the established PDU session via the first communication link and the at least one second communication link.

An advantage with this implementation form is that more than one QoS flow can be established over available communication paths to transfer a stream of data packets between the client device and the data network, thus providing more efficient use of aggregated network resources for the stream of data packets (that e.g. requires large guaranteed flow bitrate or increased data stream reliability), which cannot otherwise be provided by a single link. The current 5G QoS framework does not allow splitting QoS flows among the multi-connectivity paths to transfer a given stream of data packets. If the bitrate requirements are too big to fit one radio connectivity or N3 tunnel, or the reliability provided by a single QoS flow is lower than the application requirements, QoS framework cannot provide the requested QoS/QoE to a mobile user.

In an implementation form of a client device according to the first aspect, the application is running in the client device or in another client device.

An advantage with this implementation form is that an application that also runs outside the client device can use the same functionalities as when it runs within the client device, which is, among others, important for Augmented Reality/Virtual Reality type of applications.

In an implementation form of a client device according to the first aspect, the client device is further configured to
transmit an establishment notification to the application.

The establishment notification indicates that the PDU session is ready to carry the streams of data packets in the first set of QoS flows and that is matching the set of QoS requirements.

An advantage with this implementation form is that the application gets notified when the PDU session and QoS flows are established and match the QoS requirements, when the client device and the UPF have applied the mapping of the streams of data packets to the first set of QoS flows and are ready to start sending and receiving the streams of data packets.

In an implementation form of a client device according to the first aspect, the client device is further configured to
receive a unfulfillment notification from a network control node, wherein the unfulfillment notification indicates that at least one QoS flow in the first set of QoS flows can no longer meet at least one QoS requirement in the set of QoS requirements;
obtain AN performance measurements and backhaul performance measurements;
transmit a request for mapping to the application in response to the reception of the unfulfillment notification, wherein the request for mapping comprises the unfulfillment notification, the AN performance measurements and the backhaul performance measurements.

An advantage with this implementation form is that when the available QoS changes (one or more QoS flows can no longer be fulfilled because of changed conditions in radio access network), the application gets notified about these changes in QoS as well as the current network conditions on available paths, and is hence asked to provide a new mapping of streams of data packets to QoS flows across multiple communication paths. Without this implementation form, the mobile application is unaware of QoS changes and unable to dynamically adapt to new network and QoS conditions by specifying how it wants to use the mobile links to achieve the requested QoS characteristics.

In an implementation form of a client device according to the first aspect, the client device is further configured to
receive a second application request from the application, wherein the second application request indicates to modify the established PDU session;
obtain AN performance measurements and backhaul performance measurements;
transmit a request for mapping to the application in response to the reception of the second application request, wherein the request for mapping comprises the AN performance measurements and the backhaul performance measurements

An advantage with this implementation form is that application is able at any time, while the PDU session is established, to send a request to the client device to modify the PDU session and be requested to specify a new mapping of streams of data packets to QoS flows based on the provided current network conditions on available communication paths, which better matches the application requirements. The application knows better than the network how it wants to use the available network resources, so it is the most suitable to request from the network to modify the mapping accordingly.

In an implementation form of a client device according to the first aspect, the client device is further configured to
receive a mapping of the streams of data packets onto a second set of QoS flows from the application;
transmit a request to modify the established PDU session to the network control node based on the received mapping so that the modified PDU session carries a second set of QoS flows for the streams of data packets;
transmit the streams of data packets to the UPF in the second set of QoS flows carried over the modified PDU session via the first communication link and the at least one second communication link.

An advantage with this implementation form is that the client device can send a PDU session modification request to the network control node to carry a second set of QoS flows for the streams of data packets as specified in the mapping received from the application. Once the PDU session is modified, the client device will transmit the streams of data packets to the UPF in the second set of QoS flows over the available communication paths. Prior to this implementation form, the client device has never asked the application for its desired use of mobile links to achieve requested QoS characteristics for its traffic flows, which would trigger sending of the PDU session modification request to the network control node.

In an implementation form of a client device according to the first aspect, the client device is further configured to
receive a fulfilment notification from the network control node, wherein the fulfilment notification indicates that at least one QoS flow in the first set of QoS flows for which an unfulfillment notification had been previously received can meet at least one QoS requirement in the set of QoS requirements;
transmit a fulfilment notification reception to the application; and
   when the fulfilment notification has been received before the established PDU session has been modified
request the application to cancel the mapping to be used for modifying the established PDU session and instead use a previous mapping used for the established PDU session.

An advantage with this implementation form is that if it happens that, before the PDU session has been modified (the process triggered by the client device receiving the QoS unfulfilmment notification), the client device receives a QoS fulfilment notification that the mobile network is again able to fulfil the QoS requirements, the client device will notify the application about it and request the application to cancel the mapping used for modifying the established PDU session and revert to the previous mapping used for the established PDU session. This enables mobile applications to be aware of the conditions of the available radio links in real time and to timely adapt to such changes, which has not been enabled before.

In an implementation form of a client device according to the first aspect, the client device is further configured to
transmit a modification notification to the application.

An advantage with this implementation form is that the application gets notified when the established PDU session is modified and is ready to carry the streams of data packets in the second set of QoS flows that match the set of QoS requirements, so that the application can start sending and receiving the streams of data packets to and from the data network.

In an implementation form of a client device according to the first aspect, the mapping the streams of data packets comprise
split a stream of data packets into two or more separate QoS flows, wherein each QoS flow is established on a different communication link,
aggregate a plurality of streams of data packets into a single QoS flow on a selected communication link,
match a stream of data packets into a QoS flow on a selected communication link, and
duplicate data packets of a stream of data packets into a plurality of QoS flows, wherein each QoS flow is established on a different communication link.

For each QoS flow its QoS characteristics will be defined as part of mapping and such defined QoS flows with QoS characteristics can be requested from the network control node to setup.

An advantage with this implementation form is that it enables flexible mapping of the streams of data packets to QoS flows on one or more available communication paths and definition of QoS characteristics for each QoS flow as part of this mapping, thus providing more efficient use of aggregated network resources and enhancing the 5G QoS model when it is unable to provide the desired QoS on a single communication link to a mobile application.

In an implementation form of a client device according to the first aspect, the client device is further configured to
transmit the mapping operation or an inverse of the mapping operation to the UPF.

An advantage with this implementation form is that after transmitting this mapping, the client device and the UPF will be able to both apply the mapping on their respective sides and prepare to process the incoming and outgoing streams of data packets accordingly, without letting the 5G core network control plane know about this internal mapping and storing this mapping only internally within 5GUP protocol. The UPF can either receive the mapping of streams of data packets on second set of QoS flows as part of the in-band control information from the client device and perform the inverse of the mapping operation by itself, or it can receive the inverse of the mapping (also as part of the in-band control information) from the client device and apply such inverse of the mapping operation on the received second set of QoS flows, thus converting these QoS flows to the original streams of data packets.

In an implementation form of a client device according to the first aspect, the client device is further configured to
receive a third application request from the application, wherein the third application request indicates to release the established PDU session;
transmit a request to release the established PDU session to the network control node based on the third application request so that the established PDU session is released;
transmit a release notification to the application.

An advantage with this implementation form is that the application gets notified when the established PDU session has been released and the associated set of QoS flows and mapping operations have been removed from both the client device and the UPF.

According to a second aspect of the disclosure, the above mentioned and other objectives are achieved with a method for operating the client device according to the first aspect and its various implementation forms.

The disclosure also relates to a computer program, characterized in program code, which when run by at least one processor causes said at least one processor to execute any method according to implementations of the disclosure. Further, the disclosure also relates to a computer program product comprising a computer readable medium and said mentioned computer program, wherein said computer program is included in the computer readable medium, and comprises of one or more from the group: ROM (Read-Only Memory), PROM (Programmable ROM), EPROM (Erasable PROM), Flash memory, EEPROM (Electrically EPROM) and hard disk drive.

Further applications and advantages of the implementations of the disclosure will be apparent from the following detailed description.

### Brief Description of the Drawings

The appended drawings are intended to clarify and explain different implementations of the disclosure, in which:
- Fig. 1 shows a client device according to an example of the disclosure;
- Fig. 2 shows a method for a client device according to an example of the disclosure;
- Fig. 3 shows a network control node according to an example of the disclosure;
- Fig. 4 shows a method for a network control node according to an example of the disclosure;
- Fig. 5 shows a UPF according to an example of the disclosure;
- Fig. 6 shows a method for a UPF according to an example of the disclosure;
- Fig. 7 shows a mobile communication system according to an example of the disclosure;
- Fig. 8 shows a proposed 5GUP protocol according to an example of the disclosure;
- Fig. 9 shows a system architecture according to an example of the disclosure;
- Fig. 10 shows a control plane architecture according to an example of the disclosure;
- Fig. 11 shows user plane and control stacks according to an example of the disclosure;
- Fig. 12 shows a 5GUP state machine according to an example of the disclosure;
- Fig. 13 shows a signalling diagram according to an example of the disclosure;
- Fig. 14 shows a signalling diagram according to an example of the disclosure;
- Fig. 15 shows a signalling diagram according to an example of the disclosure;
- Fig. 16 shows a signalling diagram according to an example of the disclosure.

### Detailed Description

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those which comprise at least all the features of an independent claim. Any implementation which does not fall within the scope of the claims does not form part of the invention, but rather included as an illustrative example that is useful for understanding the invention.

In general, 5G multi-connectivity refers to a system with N number of heterogeneous radio access technology (RAT) nodes that provide radio resources to a UE that are all connected to a single UPF with N3 tunnels. Except in the case of MR-DC with 5GC, wherein only one of the two access nodes has N2 connection to AMF, all other access nodes in 5G Multi-connectivity have their own N2 connection to AMF. Similarly, to MR-DC, all QoS flows established on multiple communication paths between UE and UPF belong to the same multi-connectivity PDU session.

A problem can occur, for example, when there is a need to establish a QoS flow with Guaranteed Flow Bitrate (GFBR) that is larger than available bandwidth of any of the available paths, but feasible with the aggregated network bandwidth. Such a problem cannot be solved with MR-DC/5G Multi-connectivity and 5G QoS framework, since IP streams are mapped 1:1 to QoS flows, which makes it impossible to map a portion of a QoS flow to Master RAN node and the rest of the QoS flow to Secondary RAN node or split a QoS flow among heterogeneous access nodes. In such case when a GFBR cannot be fulfilled for a given QoS flow on a single radio interface and N3 tunnel path, the NG-RAN will send a RAN notification control message to Session Management Function (SMF) about the GFBR unfulfillment. The RAN shall keep the QoS flow and will try to fulfil the GFBR, while the 5GC may initiate N2 signalling to modify or remove the QoS flow. Consequently, client device will be notified that the requested QoS cannot be provided. Hence, there might be enough aggregated bandwidth on the two or more paths to provide the desired GFBR, but the current 5G QoS framework does not provide solution to this problem.

Another problem is when the reliability provided by a single QoS flow is lower than the application requirements (due to unpredictability of radio links). In such case it could benefit from packet duplication across the two or more QoS flows to achieve a lower packet error rate (PER). In any case, a dynamic and more flexible mapping of IP streams with QoS requirements onto QoS flows across MR-DC/multi-connectivity paths is needed (based on current network conditions) to more efficiently use available network resources and achieve the user's desired QoE/QoS.

A further problem is that when available QoS changes, the UE application is unaware of the available QoS changes and unable to dynamically adapt to it. QoS model has defined RAN notification control, where RAN notifications about unfulfillment of GFBR are propagated to AMF and SMF, but not to UE. Therefore, the UE application is not aware if any of the requested QoS characteristics of QoS flow(s) are fulfilled.

The current granularity of 5G QoS framework allows splitting DL user plane traffic of one PDU session of UE into multiple N3 tunnels, i.e., directing some QoS flows of the PDU session to N3 tunnel towards Master RAN node and the remaining QoS flows of the PDU session to N3 tunnel towards Secondary RAN node. If bitrate requirements of IP stream are too big to fit one radio connectivity or N3 tunnel, QoS framework cannot provide the requested QoS/QoE to a mobile user. Similarly, if reliability requirements of IP stream are too high to be achieved by transfer on one of the MR-DC/multi-connectivity paths due to unpredictability of radio links, the existing QoS framework cannot provide the desired QoS/QoE to the mobile user.

RAN split of QoS flows, referred to as MR-DC with single N3 termination to Master RAN node, does not take into account the QoS characteristics of the N3 link and is based only on information available within RAN (while the possible bottleneck can also be in the mobile backhaul). Similarly, the RAN protocols, MAC and PDCP do not consider the performance of the mobile backhaul in the traffic split across multiple links. The problem with MPTCP, when established over multiple access links, is that it has no knowledge of the underlying links performance and is reactive, so in the case of poor link quality this often leads to lower aggregated throughput than on the single communication link.

Furthermore, ATSSS allows using application-specific information to define traffic splitting policies. However, the application-specific information that is needed for defining ATSSS traffic splitting policies is provided by AF, therefore such solution does not apply to the case where there is no AF to control the PDU session of UE with a data network or of two UEs across a data network. Additionally, unlike the proposed solution, ATSSS does not enable splitting a QoS flow across multiple communication links within the single PDU session. It also doesn't use notification control message from RAN to trigger decision making about ATSSS traffic routing. Finally, 3GPP has not yet decided about: (a) the granularity of traffic split (per SDF/per IP flow/per packet), (b) whether the UE, network or both can decide to split a data flow across 3GPP and non-3GPP access, or (c) how the end-to-end view of traffic performance derived from traffic reports will be used to dynamically manage ATSSS behaviour.

For the above reasons the inventors have carefully studied different solutions to the drawbacks of the conventional solutions discussed previously. The inventors have identified that the conventional solutions do not provision a user plane protocol that:
- Has protocol entities on UE and UPF and implements in-band control signalling within the user plane.
- Uses notification control message from RAN to signal the need for new IP stream to QoS flow mapping and modification of the existing PDU session to set up new QoS flows. Rather if there is a lack of network resources on the single path, RAN will currently try to achieve the QoS target, while core network may signal to modify or remove the QoS flow and inform the end user that desired QoS cannot be achieved.
- Enables UE application to specify how to allocate current network resources to their traffic flows to accommodate the application-specific needs.
- Maps the IP streams to QoS flows on multi-connectivity paths according to the UE application's definition and requests from SMF to setup these QoS flows within PDU session in order to more efficiently use aggregated network path resources.

Therefore, it is herein presented a client device, a network control node and a UPF which mitigates or solves the drawbacks and problems of conventional solutions.

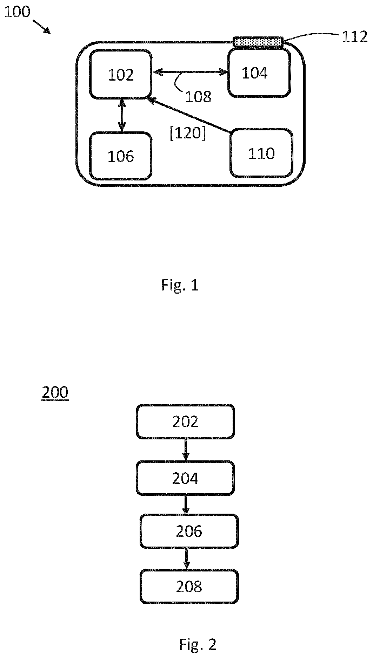

Fig. 1 shows a client device 100 according to an implementation of the disclosure. In the implementation shown in Fig. 1, the client device 100 comprises a processor 102, a transceiver 104 and a memory 106. The processor 102 is coupled to the transceiver 104 and the memory 106 by communication means 108 known in the art. The client device 100 further comprises an antenna 112 coupled to the transceiver 104, which means that the client device 100 is configured for wireless communications in a wireless communication system.

That the client device 100 is configured to perform certain actions should in this disclosure be understood to mean that the client device 100 comprises suitable means, such as e.g. the processor 102 and the transceiver 104, configured to perform said actions. Further, in the example in Fig. 1 an application 110 is running in the client device 110. The application 110 can run in the processor 102 of the client device 100 but this is not shown in Fig. 1. It is however to be noted that the application 110 can run independent of and outside the client device 110. In any case, the client device 100 is in communication with the application 110.

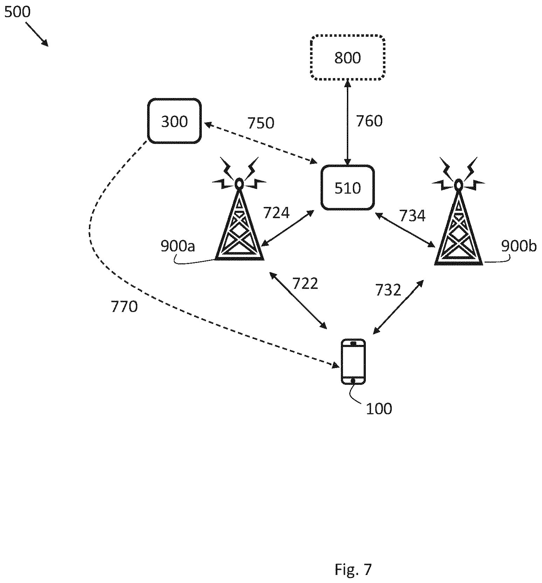

With reference to Fig. 1 and 7, the client device 100 is configured to receive a first application request 120 from the application 110. The first application request 120 indicates a request to establish a PDU session for transmission of streams of data packets; receive a set of QoS requirements associated with the streams of data packets; transmit a request to establish a PDU session to a network control node 300 upon reception of the first application request 120 so as to establish a PDU session served by a UPF 510. The established PDU session carries a first set of QoS flows for the streams of data packets; and when the first set of QoS flows meets the set of QoS requirements the client device 100 is configured to transmit the streams of data packets to the UPF 510 in the first set of QoS flows over the established PDU session via a first communication link comprising a first radio link 722, via a first network access node 900a, and a first backhaul link 724 and at least one second communication link comprising a second radio link 732, via a second network access node 900b, and a second backhaul link 734. The UPF 510 can in turn be in communication with a data network 800 via a communication interface 760 so as to forward the streams of data packets from the client device 100 to the data network 800. There can be more than one second communication link but only one is shown in Fig. 7. Furthermore, the UPF 510 can also be in communication with the network control node 300 via control interface 750. The network control node 300 provides to the UPF 510 SDF templates associated to each provisioned QoS flow via the control interface 750, which the UPF 510 uses in the DL to map the user plane traffic to QoS flows. Additionally, all the PDU session management requests sent from the client device 100 to the network control node 300 and PDU session management responses returned by the network control node 300 to the client device 100 are sent to and from the network control node 300 overthis control interface 770, via the UPF 510. Also, the network control node 300 can be in communication with the client device 100 using a control interface 770. However, the communication between the network control node 300 and the client device 100 is generally performed via one or more intermediate control nodes, such as an AMF. The AMF has control interfaces to both the network control node 300 and the client device 100. This communication works as follows: when the network control node 300 receives via AMF a fulfilment or unfulfillment notification from the first network access node 900a in the case of MR-DC or from the second network access node 900b that is also possible in the case of multi-RAT or 5G multi-connectivity, it sends a new message containing part or all information from this notification to AMF. The AMF takes a payload from this received message, inserts it in another message, and sends this new message to the client device 100. The network control node 300 also sends QoS rules to the client device 100 (in the same way, via AMF), which the client device 100 uses to determine the if QoS flows in the PDU session should be modified and if a new mapping between the UL user plane traffic and QoS flows is needed.

According to implementations of the disclosure the application 110 can be running in the client device 100 or in another client device as previously stated. Furthermore, the set of QoS requirements can be received from the application 110. However, the set of QoS requirements can also be sent from other network entities, such as PCF or AF. In response to the established PDU session the client device 100 can transmit an establishment notification (not shown in the Figs.) to the application 110 so as to inform the application of the established PDU session.

Fig. 2 shows a flow chart of a corresponding method 200 which may be executed in a client device 100, such as the one shown in Fig. 1. The method 200 comprises receiving 202 a first application request 120 from an application 110. The first application request 120 indicates a request to establish a PDU session for transmission of streams of data packets; receiving 204 a set of QoS requirements associated with the streams of data packets; transmitting 206 a request to establish a PDU session to a network control node 300 upon reception of the first application request 120 so as to establish a PDU session served by a UPF 510. The established PDU session carries a first set of QoS flows for the streams of data packets; and when the first set of QoS flows meets the set of QoS requirements the client device 100 is configured to transmitting 208 the streams of data packets to the UPF 510 in the first set of QoS flows over the established PDU session via a first communication link comprising a first radio link 722 and a first backhaul link 724 and at least one second communication link comprising a second radio link 732 and a second backhaul link 734.

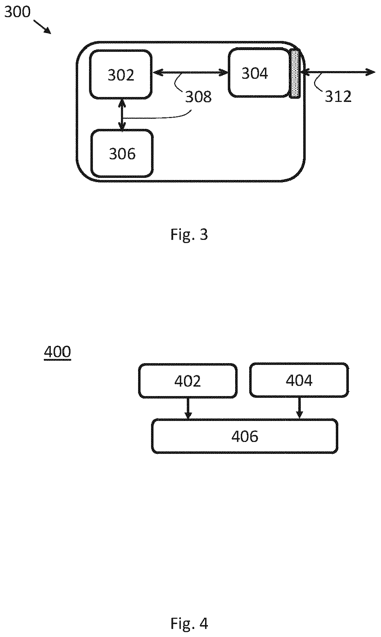

Fig. 3 shows a network control node 300 according to an implementation of the disclosure. In the implementation shown in Fig. 3, the network control node 300 comprises a processor 302, a transceiver 304 and a memory 306. The processor 302 is coupled to the transceiver 304 and the memory 306 by communication means 308 known in the art. The network control node 300 is configured for wired communications in the mobile communication system 500. The wired communication capability is provided with a wired communication interface 312 coupled to the transceiver 304. That the network control node 300 is configured to perform certain actions should in this disclosure be understood to mean that the network control node 300 comprises suitable means, such as e.g. the processor 302 and the transceiver 304, configured to perform said actions.

With reference to Fig. 7, the network control node 300 is configured to: obtain a unfulfillment notification associated with at least one QoS flow carried in a PDU session established by a client device 100 and served by a UPF 510, wherein the unfulfillment notification indicates a change in QoS fulfilment for at least one QoS flow; or to obtain a fulfilment notification associated with at least one QoS flow carried in a PDU session established by the client device 100 and served by the UPF 510, wherein the fulfilment notification indicates a change in QoS unfulfillment for at least one QoS flow; transmit the fulfilment notification or the unfulfillment notification to the client device 100 via the AMF.

Fig. 4 shows a flow chart of a corresponding method 400 which may be executed in a network access node 300, such as the one shown in Fig. 3. The method 400 comprises obtaining 402 a unfulfillment notification associated with at least one QoS flow carried in a PDU session established by a client device 100 and served by a UPF 510, wherein the unfulfillment notification indicates a change in QoS fulfilment for at least one QoS flow; or obtaining 404 a fulfilment notification associated with at least one QoS flow carried in a PDU session established by the client device 100 and served by the UPF 510, wherein the fulfilment notification indicates a change in QoS unfulfillment for at least one QoS flow; transmitting 406 the fulfilment notification or the unfulfillment notification to the client device 100.

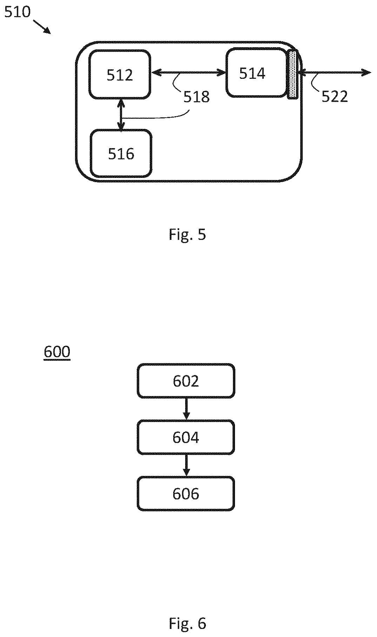

Fig. 5 shows a UPF 510 according to an implementation of the disclosure. In the implementation shown in Fig. 5, the UPF 510 comprises a processor 512, a transceiver 514 and a memory 516. The processor 512 is coupled to the transceiver 514 and the memory 516 by communication means 518 known in the art. The UPF 510 is configured for wired communications in the mobile communication system 500. The wired communication capability is provided with a wired communication interface 522 coupled to the transceiver 514. That the UPF 510 is configured to perform certain actions should in this disclosure be understood to mean that the UPF 510 comprises suitable means, such as e.g. the processor 512 and the transceiver 514, configured to perform said actions.

With reference to Fig. 7, the UPF 510 is configured to receive in-band control information from a client device 100 over at least one communication link. The in-band control information is associated with a PDU session established between the client device 100 and the UPF 510. The established PDU session carries a first set of QoS flows for streams of data packets.

Fig. 6 shows a flow chart of a method 600 which may be executed in a UPF 510, such as the one shown in Fig. 5. The method 600 comprises receiving 602 in-band control information from a client device 100 and the in-band control information is associated with a PDU session established between the client device 100 and the UPF 510. The established PDU session carries a first set of QoS flows for streams of data packets. According to implementations of the disclosure the method 600 further comprises the steps of: receiving 604 the streams of data packets from a client device 100 based on the in-band control information, wherein the streams of data packets are received in the first set of QoS flows over the established PDU session via a first communication link 720 comprising a first radio link 722 and a first backhaul link 724 and at least one second communication link 730 comprising a second radio link 732 and a second backhaul link 734; and transmitting 606 the streams of data packets to the client device 100 based on the in-band control information, wherein the streams of data packets are transmitted in the first set of QoS flows over the established PDU session via the first communication link 720 and the at least one second communication link 730.

Moreover, an upper layer protocol entity herein denoted 5G User Plane Protocol (5GUP) using in-band control information according to implementations of the disclosure is herein proposed involving the client device 100, the network control node 300 and the UPF 510. In the client device 100, 5GUP is responsible for mapping the UL IP streams received from the application 110 to QoS flows on both of the links towards radio (e.g. Uu air interface/RAN node) and N3 interface between the network control node 300 and the UPF 510 according to a specified mapping set provided by the application 110. The 5GUP in the client device 100 also applies the inverse of the mapping on DL QoS flows to revert them back to original IP streams. In the UPF 510, 5GUP is responsible for mapping the DL IP streams to QoS flows on both links towards radio and N3 interface, according to the mapping provided by the application 110. The 5GUP in the UPF 510 also applies the inverse of the mapping on UL QoS flows to revert them back to the original IP streams.

Therefore, the client device 100 can further be configured to receive the streams of data packets in the first set of QoS flows from the UPF 510 over the established PDU session via the first communication link 720 and the at least one second communication link 730.

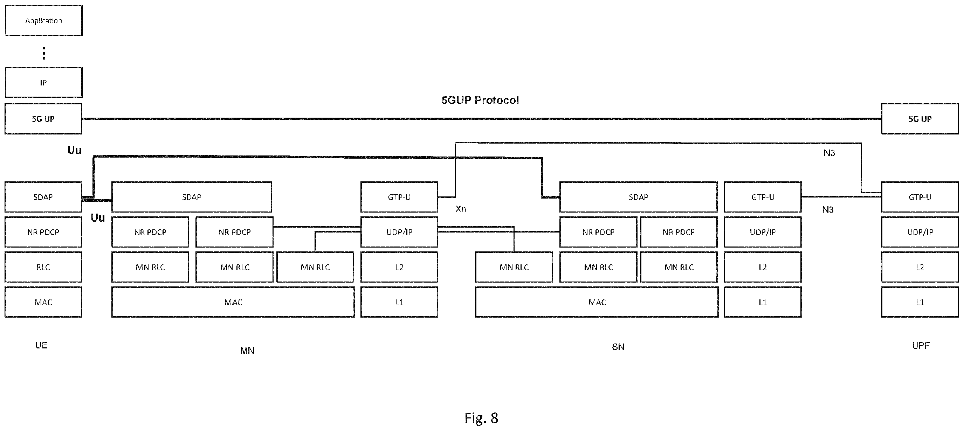

As previously described, 5GUP can be used in 5G multi-connectivity. However, for the purpose of describing its protocol stack, 5GUP is deployed on top of MR-DC with 5GC architecture as illustrated in Fig. 8**Error! Reference source not found.**. The abbreviations of user plane protocols showed in Fig.8 are: Service Data Adaptation Protocol (SDAP), New Radio Packet Data Convergence Protocol (NR PDCP), Radio Link Control (RLC) Protocol, Medium Access Control (MAC) Protocol, GPRS Tunnelling Protocol User plane (GTP-U), User Datagram Protocol (UDP), Internet Protocol (IP), Layer 1 (L1) Protocol, and Layer 2 (L2) Protocol. The MR-DC with 5GC is requested by Master RAN node from SMF for some or all of the client device 100 requested PDU sessions. The UPF 510 knows that PDU session is of MR-DC type because it is aware that it has to establish two N3 terminations (to MN and SN). It is assumed that this information is made available from the UPF 510 to 5GUP protocol entity in the client device 100. 5GUP also assumes that RAN and backhaul measurements in DL/UL per QFI (such as packet delay, delay variation, IP throughput and packet loss rate) are provisioned and configured to store values in the client device 100 and UPF 510, which can be read by their 5GUP protocol entities. Therefore, both the client device 100 and the UPF 510 5GUP protocol entities are aware of available MR-DC paths and their current network conditions.

The 5GUP protocol entity at the client device 100 side makes sure that at any time the application 110 can specify how it wants to allocate the QoS flows including when the QoS changes. Notification control message from AN (such as RAN notification) about GFBR fulfilment and the application requests are used to signal the need for new IP stream to QoS flow mapping. Upon receiving a RAN notification or application request for modification of the PDU session, the client device 100 exposes to the application 110 the information about performance of available network paths (such as radio links and backhaul (N3) tunnels), GFBR fulfilment and changes in QoS of the provisioned QoS flows. Based on this information the application 110 can decide and specify how it wants to allocate available network resources for its traffic flows in order to achieve desired QoS/QoE objectives.

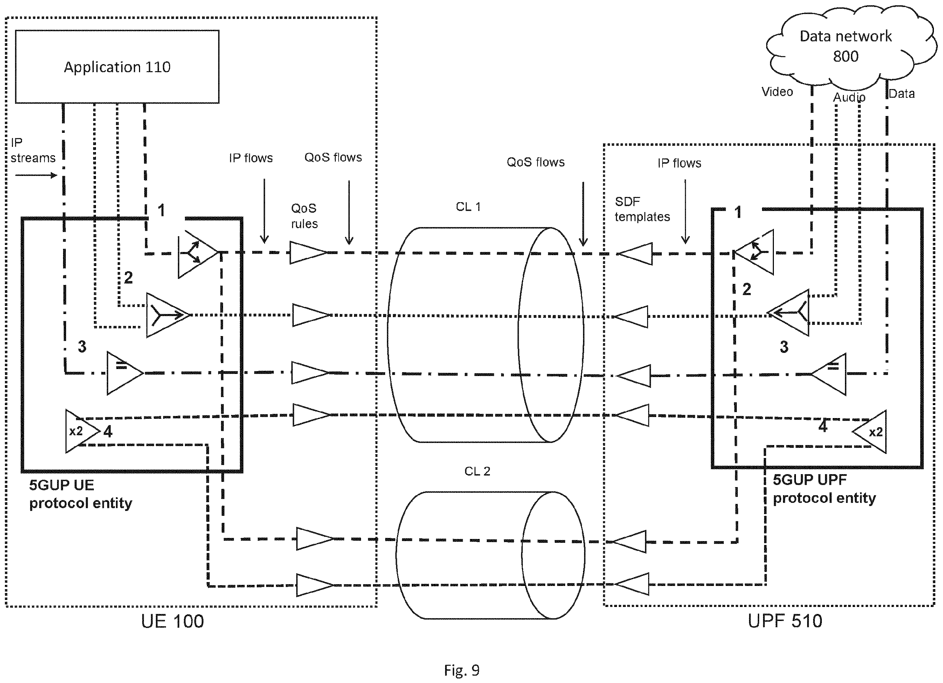

5GUP can map application's 110 IP streams on UL/DL IP flows on at least two paths (QoS Flows) using the mappings depicted and numbered in Fig. 9:
1. Split a stream of data packets into two or more separate QoS flows, wherein each QoS flow is established on a different communication link (CL 1 and CL 2 in Fig. 9),
2. Aggregate a plurality of streams of data packets into a single QoS flow on a selected communication link,
3. Match a stream of data packets into a QoS flow on a selected communication link, and
4. Duplicate data packets of a stream of data packets into a plurality of QoS flows, wherein each QoS flow is established on a different communication link.

5GUP defines and installs the mappings (i.e. split, duplicate, aggregate and match) and packet filters in its protocol entities for such flow manipulation. It may allocate one QoS flow on each connectivity path for in-band signalling and (optional) path measurements. When UL/ DL packets arrive to 5GUP entity at the client device 100 or UPF 510, they are matched against the defined packet filters and matching 5GUP operation is invoked. The control part of 5GUP triggers the PDU session modification request to the network control node 300 (SMF in 5G standard) to establish the new QoS flows within the PDU session, given the specified mapping of IP stream to QoS flows by the application 110.

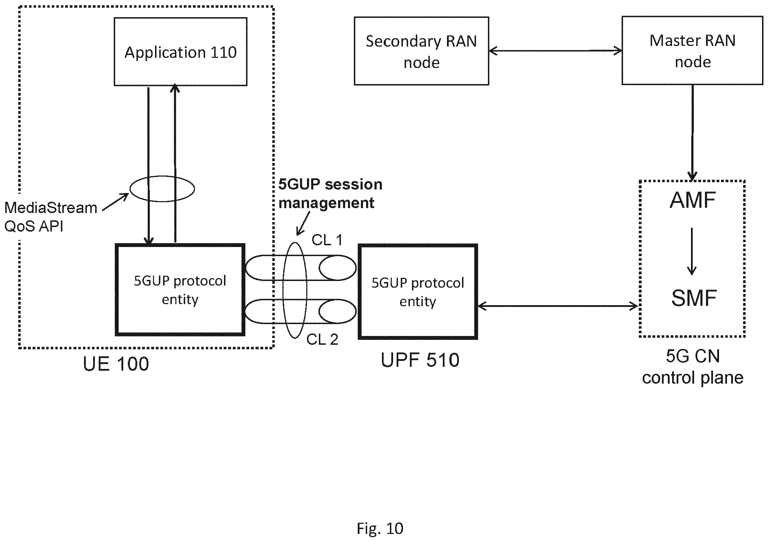

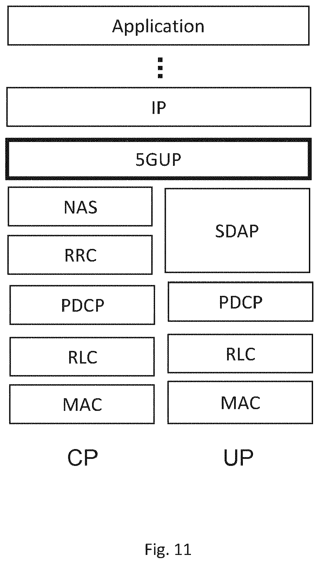

Fig. 10 illustrates the control part of the protocol architecture and Fig. 11 illustrates the control plane (CP) and user plane (UP) protocol stack of the client device 100. 5GUP protocol entity at the client device 100 receives first 120 and second 122 application requests to start, modify and release PDU session with its QoS flows, through e.g. a MediaStream QoS Application Programming Interface (API), and interacts with SMF in the 5G core network control plane to request establishment, modification and release of the PDU sessions with the requested QoS flows 5GUP protocol entity at the client device 100 receives RAN notification from SMF via AMF about GFBR fulfilment (i.e. when GFBR of the QoS flow cannot be achieved and when applicable when it can be achieved again) and informs the application 110 of changes in the fulfilment of the QoS so that the application can decide if it wants to request modification of the QoS flows in the PDU session. Finally, by exposing network state information via the MediaStream QoS API 5GUP enables the application 110 to e.g.:
- Specify what portion of IP stream will be transferred over which N3 tunnel (and Uu air interface/RAN node).
- Specify how many QoS flows to request to setup in a PDU session.
- Define QoS characteristics for each QoS flow that it will request from network control node 300 to setup. QoS parameters that control specific QoS forwarding behaviour of a 5G QoS flow referred to as 5G QoS Indicator or 5QI include: resource type (such as GBR, delay critical GBR or non-GBR), priority level, packet delay budget, packet error rate, and averaging window defined only for GBR flows. Besides 5QI, the 5GUP protocol uses notification control that is currently defined only for GBR types of QoS flows. Other QoS parameters that characterize a GBR or delay critical GBR QoS flow are e.g.: an allocation and retention priority (ARP), GFBR and maximum flow bit rate (MFBR).

The MediaStream QoS API is a bi-directional API exposed by the 5GUP protocol entity on the client device 100 that the application 110 can use to interact with the client device 100. The MediaStream QoS API comprises a set of functions which allows the application 110 to e.g.: manage a PDU session with relevant QoS requirements, enabling the application 110 to specify how it wants to allocate network resources to meet the desired QoS requirements for the transfer of its streams of data packets (IP traffic flows) or to modify its QoS requirements based on new perceived network conditions; and be aware about any changes in the PDU session that can affect the current QoS requirements for the above PDU session perceived at the client device, including the events that relate to the status and QoS fulfilment of the established PDU session, and changes in radio link conditions.

The present MediaStream QoS API may define the following functions:
- MediaQoSRequest: this function enables the application 110 to request from the client device 100 to establish a PDU session that can carry the described IP traffic streams with the specified set of QoS requirements:
   - Input required: IP streams description, QoS requirements.
   - Input optional: None.
   - Output required: None.
   - Output optional: None.
- ModifyMediaQoS: this function enables the application 110 to request from the client device 100 to modify the established PDU session by setting up a new set of QoS flows that can carry the described IP traffic streams with the specified set of QoS requirements:
   - Input required: IP streams description, QoS requirements.
   - Input optional: None.
   - Output required: None.
   - Output optional: None.
- TerminateMediaQoS: this function enables the application 110 to request from the client device 100 to release the established PDU session used for transfer of given streams of data packets and remove the associated QoS flows and mapping operations from both the client device 100 and the UPF 510:
   - Input required: IP streams.
   - Input optional: QoS flows.
   - Output required: None.
   - Output optional: None.
- Get-IP-QoSFIowsMapping: this function enables the client device 100 to request from the application 110 to provide the mapping of the streams of data packets to QoS flows on one or more communication links based on the provided multi-connectivity/MR-DC network paths performance information and optionally the unfulfillment GFBR notification information from RAN:
   - Input required: RAN performance measurement, backhaul performance measurement values of multi-connectivity/MR-DC communication paths.
   - Input optional: GFBR unfulfillment notification information from RAN.
   - Output required: None.
   - Output optional: None.
- Proposed-IP-QoSFIowsMapping: this function enables the application 110 to provide specific mapping of the streams of data packets to QoS flows on one or more communication links, define QoS characteristics for each QoS flow that the client device 100 will request from the network control node 300 to setup, and specify what portion of IP stream will be transferred to which QoS flow:
   - Input required: QoS flows identifiers and definitions for each communication link, mapping operation for each type of IP flow (identified with five tuple of <source IP address, source port, destination IP address, destination port, protocol>) to one or more QoS flows, and a portion of each IP stream to be transferred over selected QoS flow.
   - Input optional: None.
   - Output required: None.
   - Output optional: None.
- MediaQoSEstablished: this function enables the client device 100 to send the establishment notification to the application 110 indicating that the PDU session has been established and is ready to carry the streams of data packets over the first set of QoS flows. The notification also includes an indication that the first set of QoS flows matches the set of QoS requirements, so that the application can start sending and receiving the streams of data packets to and from the data network, or in the opposite case, that the first set of QoS flows in the established PDU session does not match the set of QoS requirements:
   - Input required: QoS flows.
   - Input optional: None.
   - Output required: None.
   - Output optional: None.
- MediaQoSError: this function enables the client device 100 to send an error notification related to any of the following operations: the PDU session was not established correctly; the PDU session was not modified correctly; an error occurred while terminating the PDU session:
   - Input required: Result of PDU session management operation.
   - Input optional: None.
   - Output required: None.
   - Output optional: None.
- MediaQoSRestored: this function enables the client device 100 to send the modification notification to the application 110 indicating that the PDU session has been modified with the second QoS flows and is ready to carry the streams of data packets over the second set of QoS flows that match the set of QoS requirements, so that the application can start sending and receiving the streams of data packets to and from the data network:
   - Input required: QoS flows.
   - Input optional: None.
   - Output required: None.
   - Output optional: None.
- MediaQoSTerminated: this function enables the client device 100 to send the release notification to the application 110 indicating that the established PDU session has been released and the associated set of QoS flows and mapping operations have been removed from both the client device 100 and the UPF 510:
   - Input required: QoS flows.
   - Input optional: None.
   - Output required: None.
   - Output optional: None.

The functionality described above enables the application 110 to define the mapping of IP streams to QoS flows. 5GUP protocol entity at the client device also performs the following user plane functions:
- Receives UL IP packets from the application, maps the given streams of data packets to QoS flows, adds the 5GUP protocol header to the received packets, and transmits 5GUP Packet Data Units (PDUs) to its peer (the 5GUP protocol entity at the UPF).
- Receives 5GUP PDUs from the 5GUP protocol entity at the UPF in DL, removes the 5GUP protocol header, and maps QoS flows back to IP streams (that are received by the application).

Besides operating as a user plane protocol, 5GUP protocol entity at the client device 100 side also implements some control plane functions, such as:
- Sends the PDU session management requests with QoS flows to SMF (and receives responses).
- Receives RAN notifications from the network control node 300 via AMF. Therefore, it appears in Fig. 11 in both the user plane (UP) and control plane (CP) protocol stack of UE.

Fig. 11 also shows that the 5GUP protocol entity at the client device 100 interacts with the application 110. More specifically, the 5GUP protocol entity at the client device 100 receives the application 110 requests to establish, modify or release PDU session, notifies the application 110 about changes in QoS fulfilment, and requests and receives from the application 110 the mapping of streams of data packets.

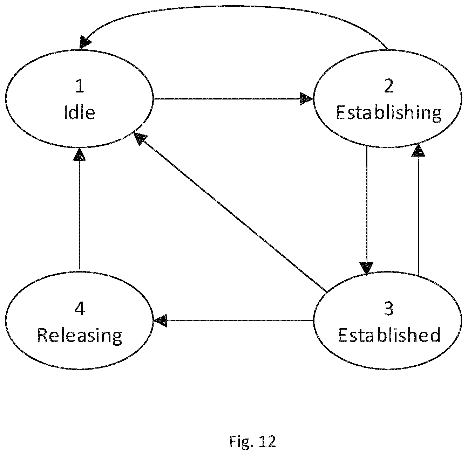

5GUP protocol entity implements a finite state machine (FSM) comprising of four states: Idle, Establishing, Established, and Releasing as illustrated in the FSM of Fig. 12. For each 5GUP session, a 5GUP implementation maintains a state variable that tracks in which of the four states the 5GUP session is in:
- The first state is "Idle" state. In the "Idle" state, 5GUP initializes all resources, sends a request to network control node 300 to establish a multi-connectivity PDU session and when the PDU session gets established the 5GUP changes its state to "Establishing". In "Idle" state 5GUP session is not created yet and if an error occurs in any of the states in FSM, 5GUP session is terminated and returned to "Idle" state.
- In the "Establishing" state, 5GUP initiates creation of 5GUP session, pauses the sending of UL/DL packets, checks if the QoS requirements of an application 110 can be met by PDU session's established QoS flows, extracts performance measurement values on the client device 100 and UPF 510, and acquires IP streams to QoS flow mapping from the application 110, converting them to 5GUP operations. After applying 5GUP operations on both the client device 100 and UPF 510 sides and receiving confirmations from the peer protocol entity that the 5GUP session has been established, 5GUP changes its state to "Established".
- When 5GUP enters the "Established" state, 5GUP starts/resumes sending UL/DL packets and sends notification to the application 110 about the established/modified PDU session and QoS flows. From the "Established" state 5GUP can change back to "Establishing" state, if it receives application's 110 request for modification of PDU session or a RAN notification as a signal for a need to change IP streams to QoS flows mapping. Alternatively, 5GUP can change the state from "Established" to "Releasing" when it receives the application's 110 request for releasing the 5GUP session.
- When entering the "Releasing" state, 5GUP initiates release of 5GUP and PDU sessions, removes all 5GUP operations on the client device 100 and UPF 510 sides, and stops UL/DL packet scheduling.

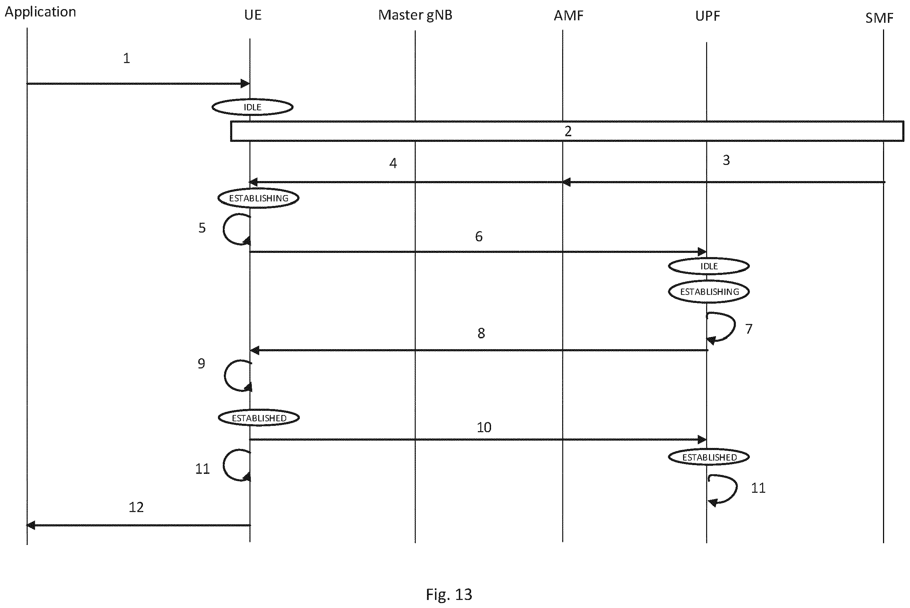

Figs. 13 to 16 show detailed sequence diagrams of PDU and 5GUP session management according to implementations of the disclosure. The examples and scenarios in Figs. 13 to 16 are set in a 5G 3GPP context and hence conventional 3GPP terminology is therefore used, such that a client device 100 is denoted UE, the network control node 300 is denoted SMF, AN is denoted RAN, etc. Also, further entities, such as Master gNB and AMF are introduced so as to provide a fuller understanding of the disclosure in this particular context. Moreover, protocol message types as defined in 3GPP standards are used. However, implementations of the disclosure are not limited thereto.

Fig. 13 illustrates the scenario in which the application 110 sends a request to UE 5GUP protocol entity to provide specified QoS support to given IP flows and the UE 5GUP protocol entity establishes the 5GUP session with the IP streams to QoS flows mapping provided by SMF and decided by PCF in the 5G core network control plane. In this scenario the PCF-provisioned QoS flows that are each established on one of the available communication paths happen to match the application's 110 QoS requirements.

Step 1 in Fig. 13: From the application 110 to UE 5GUP protocol entity: send a 5GUP MediaQoSRequest (comprising IP streams description and QoS requirements). The application 110 sends a first application request 120 to the UE 100 5GUP protocol entity for establishing a PDU session for transfer of the given IP traffic streams with specified set of QoS requirements.

Step 2 in Fig. 13: From UE 5GUP protocol entity to SMF (via AMF): send a NAS Create (MR-DC) PDU session establishment request and PDU session establishment procedure. Upon receiving the 5GUP MediaQoSRequest from the application 110, the UE 5GUP protocol entity goes into "Idle" state and triggers the multi-connectivity (in this example MR-DC) PDU session establishment in the SM NAS message. AMF forwards the SM NAS message to the SMF. This procedure of establishing PDU session is specified in TS 23.502 and is required to establish a communication path between the UE 100 and the UPF 510 5GUP protocol entities. When establishing a MR-DC PDU session, an MN also requests addition of SN and can request allocation of some QFIs to SN. This setup of multi-connectivity PDU session is required by 5GUP protocol, which also assumes that after this step RAN and backhaul measurements are set up on available paths and their respected values are continuously stored at the UE 100 and the UPF 510.

Step 3 in Fig. 13: From SMF to AMF: send a Namf_Communication_N1N2MessageTransfer PDU session establishment request. SMF sends a confirmation to AMF that PDU session has successfully been established, containing the list of provisioned QoS flows. These QoS flows might not necessarily be the same that the application 110 has specified but have been provisioned by PCF.

Step 4 in Fig. 13: At this point PDU session is established, first uplink and downlink data have been sent, after which UE 100 5GUP protocol entity to go into "Establishing" state.

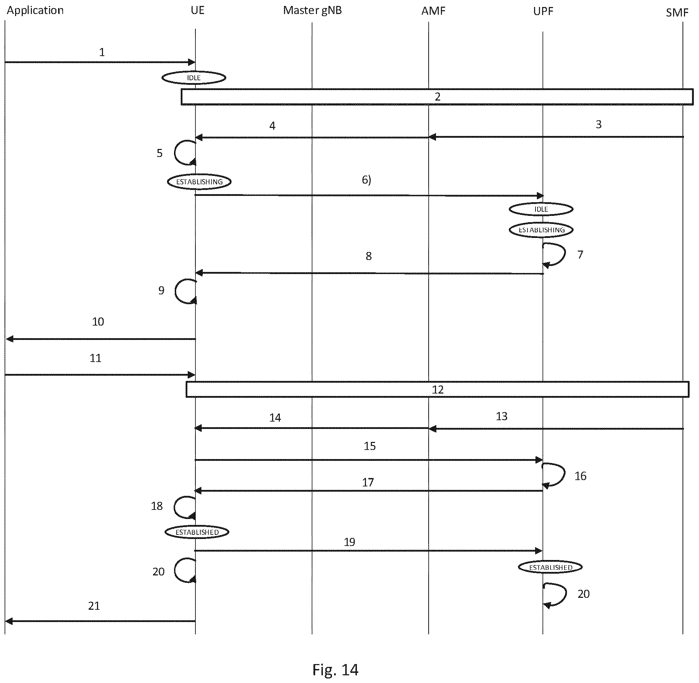

Step 5 in Fig. 13: the UE 100 5GUP protocol entity checks if the application requested QoS can be provided by the newly established QoS flows. The outcome of this verification can be threefold:
(a) The newly provisioned QoS flows can provide the requested QoS, which case is illustrated in Fig. 13 and explained herein.
(b) The newly provisioned QoS flows cannot provide the requested QoS, in which case the UE 5GUP protocol entity will collect the network paths performance measurements (such as RAN and backhaul performance measurements) and estimate if there are enough aggregated network resources to provide the requested QoS. If so, the UE 100 5GUP protocol entity will expose the performance of these paths to the application 110, asking it how it wants to allocate IP streams to QoS flows on the available MR-DC paths. Next it will establish the 5GUP session with the application specified IP stream to QoS flow mapping and send a request to SMF to modify the PDU session accordingly, as shown in Fig. 14.
(c) Otherwise, if the UE 100 5GUP protocol entity decides that there are not enough aggregated resources to achieve the application requested QoS or the SMF rejects the PDU modification request with application specified QoS flows, the UE 100 5GUP protocol entity will establish the 5GUP session with default IP streams to QoS flow mapping (decided in the MR-DC PDU session establishment procedure), and inform the application 110 about it.

Step 6 in Fig. 13: From the UE 100 5GUP protocol entity to UPF 510 5GUP protocol entity: send a 5GUP Create 5GUP session request (e.g. comprising sessionld, IP streams description, QoS requirements). The UE 100 5GUP protocol entity sends an in-band 5GUP session request with the default IP stream to QoS flow mapping (sent by SMF) and sends it to UPF 510 5GUP protocol entity.

Step 7 in Fig. 13: When the UPF 510 5GUP protocol entity receives this request, goes into "Idle" and immediately after into "Establishing" state, and applies the PDU session's mapping and default 5GUP operations. Hence, the UPF 510 receives in-band control information associated with the PDU session from the UE 100.

Step 8 in Fig. 13: From UPF 510 5GUP protocol entity to UE 100 5GUP protocol entity: send a 5GUP Create 5GUP session confirm (comprising sessionld). The UPF 510 5GUP protocol entity confirms the successful 5GUP session creation to the UE 100 5GUP protocol entity.

Step 9 in Fig. 13: Upon receiving this confirmation, the UE 100 5GUP protocol entity also applies the PDU session mapping and 5GUP operations and transfers into "Established" state.

Step 10 in Fig. 13: From UE 100 5GUP protocol entity to UPF 510 5GUP protocol entity: send a 5GUP session established (sessionld). The UE 100 informs the UPF 510 that 5GUP session has been established.

Step 11 in Fig. 13: The 5GUP protocol entities on UE 100 and UPF 510 perform the following operations in parallel:
- The UE 100 5GUP protocol entity starts sending UL packets. The UPF receives the UL packets from the UE 100 based on the in-band control information.
- The UPF 510 5GUP protocol entity transfers into "Established" state and starts sending DL packets based on the in-band control information.

Step 12 in Fig. 13: UE 100 5GUP protocol entity informs the application 110 that PDU session has been established by transmitting an establishment notification to the application 110.

Fig. 14 shows an alternative sequence diagram of creating a 5GUP session where the QoS flows provisioned by default PDU session establishment cannot provide the requested QoS, but there are enough aggregated network resources on available multi-connectivity paths to provide the requested QoS (as explained in 5b outcome of UE 100 5GUP protocol entity verification in previous diagram). The first 5 steps in Fig. 14 are the same as in the sequence diagram shown in Fig. 13. The basic steps of this implementation from the client device perspective involves: obtain AN performance measurements and backhaul performance measurements when the first set of QoS flows does not meet the first set of QoS requirements; check whether the set of QoS requirements can be fulfilled by available aggregated resources on the first communication link 720 and the at least one second communication link 730 based on the AN performance measurements and the backhaul performance measurements; and transmit a request for mapping to the application 110 when the first set of QoS requirements can be fulfilled by the available aggregated resources. The request for mapping comprises the AN performance measurements and the backhaul performance measurements. In response to the request for mapping, the client device 100: receives a mapping of the streams of data packets onto a second set of QoS flows from the application 110; transmits a request to modify the established PDU session to the network control node 300 based on the received mapping so that the modified PDU session carries a second set of QoS flows for the streams of data packets; and transmits the streams of data packets to the UPF 510 in the second set of QoS flows carried over the modified PDU session via the first communication link 720 and the at least one second communication link 730.

Step 1 in Fig. 14: From the application 110 to UE 100 5GUP protocol entity: send a 5GUP MediaQoSRequest (comprising IP streams description, QoS requirements). The application 110 sends a first application request for establishing a PDU session for transfer of the given IP traffic streams with specified QoS requirements.

Step 2 in Fig. 14: From UE 100 5GUP protocol entity to SMF (via AMF): send a NAS Create (MR-DC) PDU session establishment request (and PDU session establishment procedure). Upon receiving the 5GUP MediaQoSRequest from the application 110, UE 100 5GUP protocol entity goes into "Idle" state and triggers the multi-connectivity (in this example MR-DC) PDU session establishment in the SM NAS message. AMF forwards the SM NAS message to the SMF. This procedure of establishing PDU session is specified in TS 23.502 and is required to establish a communication path between UE 100 and UPF 510 5GUP protocol entities. When establishing a MR-DC PDU session, an MN also requests addition of SN and can request allocation of some QFIs to SN. This setup of multi-connectivity PDU session is required by 5GUP protocol, which also assumes that after this step RAN and backhaul measurements are set up on available paths and their respected values are continuously stored at UE 100 and UPF 510.

Step 3 in Fig. 14: From SMF to AMF: send a Namf_Communication_N1N2MessageTransfer (i.e. a PDU session establishment request). SMF sends a confirmation to AMF that PDU session has successfully been established, containing the list of provisioned QoS flows.

Step 4 in Fig. 14: At this point PDU session is established, first uplink and downlink data have been sent, after which UE 100 5GUP protocol entity to go into "Establishing" state.

Step 5 in Fig. 14: UE 100 5GUP protocol entity checks if the application requested QoS can be provided by the newly established QoS flows, and decided that default PDU session establishment cannot provide the requested QoS.

Step 6 in Fig. 14: From UE 100 5GUP protocol entity to UPF 510 5GUP protocol entity: send a 5GUP Create 5GUP session request (comprising sessionld, IP streams description, QoS requirements). The UE 100 5GUP protocol entity sends a request to UPF 510 5GUP protocol entity to support IP streams with specific QoS characteristics.

Step 7 in Fig. 14: The UPF 510 5GUP protocol entity goes first to "Idle" and immediately after into "Establishing" state and extracts the backhaul performance measurement values.

Step 8 in Fig. 14: From UPF 510 5GUP protocol entity to UE 100 5GUP protocol entity: send a 5GUP Create 5GUP session confirm (comprising sessionld, backhaul performance measurement values). The UPF 510 5GUP protocol entity confirms the 5GUP session request, inserting the backhaul performance measurement values to this message.

Step 9 in Fig. 14: After receiving the confirmation with backhaul performance measurement values, the UE 100 5GUP protocol entity extracts RAN performance measurement values. Based on the obtained RAN performance measurements and backhaul performance measurements the UE 100 5GUP protocol entity determines that there are enough aggregated network resources on available multi-connectivity paths to provide the requested QoS.

Step 10 in Fig. 14: From UE 100 5GUP protocol entity to the application 110: 5GUP Get IP-QoS flows mapping (RAN performance measurement, backhaul performance measurement values). The UE 100 5GUP protocol entity exposes the RAN and backhaul performance measurements of MR-DC paths to the application 110, asking it to specify IP streams to QoS flows mapping on these paths.

Step 11 in Fig. 14: From the application 110 to UE 100 5GUP protocol entity: send a 5GUP Proposed IP-QoS flows mapping. The application 110 proposes the IP streams to QoS flows mapping to UE 100 5GUP protocol entity, which converts each of these mappings to 5GUP operations, such as split, merge, map and duplicate).

Step 12 in Fig. 14: From UE 100 5GUP protocol entity to SMF: send a NAS Modify PDU session request (with specified QoS flows). The UE 100 5GUP protocol entity sends a request to SMF (via UPF 510 5GUP protocol entity) to modify the PDU session and establish the new QoS flows specified in the mapping. The PDU session modification procedure is performed as specified in TS 23.502. After the PDU session has been successfully modified, the UE 100 5GUP protocol entity goes back from "Establishing" into "Established" state.

Step 13 in Fig. 14: From SMF to AMF: send a Nsmf_PDUSession_UpdateSMContext (comprising PDU session modification command). SMF sends a PDU session modification command to AMF, containing the list of provisioned QoS flows, that AMF should forward to UE 100 5GUP protocol entity.

Step 14 in Fig. 14: From AMF to UE 100 5GUP protocol entity: send a NAS PDU session modification command (QoS flows). AMF forwards the PDU session modification command to UE 100 5GUP protocol entity.

Step 15 in Fig. 14: From UE 100 5GUP protocol entity to UPF 510 5GUP protocol entity: send a 5GUP Proposed IP-QoS flows mapping (comprising sessionld, 5GUP operations). The UE 100 5GUP protocol entity sends the 5GUP operations as part of in-band control information to UPF 510 5GUP protocol entity to enforce on the actual sent/received IP packets. The operations can comprise mapping operations or an inverse of the mapping operations.

Step 16 in Fig. 14: The UPF 510 5GUP protocol entity applies the received 5GUP operations on the sent/received IP packets.

Step 17 in Fig. 14: From UPF 510 5GUP protocol entity to the UE 100 5GUP protocol entity: send a 5GUP proposed IP-QoS flows mapping applied. The UPF 510 5GUP protocol entity notifies the UE 100 5GUP protocol entity that it has applied the received IP streams to QoS flow mapping.

Step 18 in Fig. 14: The UE 100 5GUP protocol entity applies the provided 5GUP operations.

Step 19 in Fig. 14: From UE 100 5GUP protocol entity to UPF 510 5GUP protocol entity: send a 5GUP session established (comprising sessionld). The UE 100 5GUP protocol entity notifies the UPF 510 5GUP protocol entity that the 5GUP session has successfully been established.

Step 20 in Fig. 14: The 5GUP protocol entities on the UE 100 and the UPF 510 perform the following operations in parallel:
- The UE 100 5GUP protocol entity starts sending UL packets.
- The UPF 510 5GUP protocol entity transfers into "Established" state and starts sending DL packets.

Step 21 in Fig. 14: From UE 100 5GUP protocol entity to the application 110: send a 5GUP MediaQoSEstablished (comprising QoS flows). The UE 100 5GUP protocol entity notifies the application 110 that the PDU session with the requested QoS flows has been established by transmitting an establishment notification to the application 110.

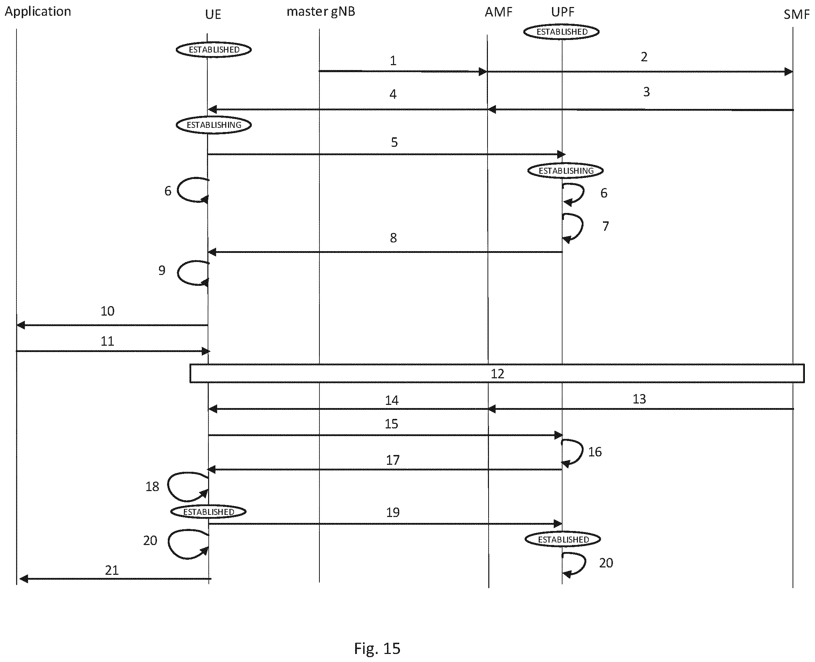

A request for modification of the established PDU session can be triggered by the second application request 122 (if the application wants to modify the QoS requirements of its traffic flows or to provide different mapping) or by receiving RAN notifications about GFBR (un)fulfillment once the 5GUP session has been successfully established. The latter scenario is illustrated in Fig. 15. The basic steps of this implementation from the client device perspective involves one of:
- Receive an unfulfillment notification from a network control node 300 (e.g. via AMF). The unfulfillment notification indicates that at least one QoS flow in the first set of QoS flows can no longer meet at least one QoS requirement in the first set of QoS requirements; obtain AN performance measurements and backhaul performance measurements; transmit a request for mapping to the application 110 in response to the reception of the unfulfillment notification. The request for mapping comprises the unfulfillment notification, the AN performance measurements and the backhaul performance measurements.
- Receive a fulfilment notification from the network control node 300 (e.g. via AMF) if the client device 100 has received a unfulfillment notification. The fulfilment notification indicates that at least one QoS flow in the first set of QoS flows for which an unfulfillment notification had been previously received can meet at least one QoS requirement in the first set of QoS requirements; transmit a fulfilment notification reception to the application 110; and when the fulfilment notification has been received before the established PDU session has been modified; request the application 110 to cancel the mapping to be used for modifying the established PDU session and instead use a previous mapping used for the established PDU session.
- Receive a second application request 122 from the application 110. The second application request 122 indicates to modify the established PDU session; obtain AN performance measurements and backhaul performance measurements; transmit a request for mapping to the application 110 in response to the reception of the second application request 122. The request for mapping comprises the AN performance measurements and the backhaul performance measurements.

In response to the request for mapping, the client device 100: receives a mapping of the streams of data packets onto a second set of QoS flows from the application 110; transmits a request to modify the established PDU session to the network control node 300 based on the received mapping so that the modified PDU session carries a second set of QoS flows for the streams of data packets; and transmits the streams of data packets to the UPF 510 in the second set of QoS flows carried over the modified PDU session via the first communication link 720 and the at least one second communication link 730.

Step 1 in Fig. 15: From Master RAN node to AMF: send a N2 RAN notification. Master RAN node sends N2 RAN notification to AMF when a GBR QoS flow cannot be fulfilled any longer. The unfulfillment notification indicates that at least one QoS flow can no longer meet at least one QoS requirement.

Step 2 in Fig. 15: From AMF to SMF: send an Nsmf_PDUSession_UpdateSMContext request (comprising N2 RAN notification). AMF forwards the RAN notification to SMF by invoking Nsmf_PDUSession_UpdateSMContext (comprising N2 RAN notification).

Step 3 in Fig. 15: From SMF to AMF: send a Nsmf_PDUSession_UpdateSMContext response (comprising N1: RAN Notification). It will be proposed to extend the 3GPP standard by forwarding the RAN notification from SMF to UE 100 (via AMF) in order to notify the application 110 about QoS changes and enable it to adapt by specifying new IP stream to QoS flow mapping. SMF responds to AMF through Nsmf_PDUSession_UpdateSMContext response (comprising N1: RAN notification), carrying the RAN notification that AMF should provide to the UE 100.

Step 4 in Fig. 15: From AMF to UE 100: send a N1 RAN Notification. AMF forwards the RAN notification to the UE 100. Hence the UE receives a unfulfillment notification from the SMF.

Step 5 in Fig. 15: From UE 100 5GUP protocol entity to UPF 510 protocol entity: send a 5GUP Modify 5GUP session request (comprising sessionld, RAN notification). After receiving the RAN notification, the UE 100 5GUP protocol entity transits from "Established" to "Establishing" state and sends the in-band request for modifying 5GUP session to the UPF 510 5GUP protocol entity, containing part or all the information from the RAN notification.

Step 6 in Fig. 15: The UPF 510 5GUP protocol entity receives the in-band 5GUP session modification request, upon which it transits to "Establishing" state and pauses with sending of DL packets until the session is restored again. Hence, in-band control information is received from the UE 100.

Step 7 in Fig. 15: The UPF 510 5GUP protocol entity extracts the backhaul between the UPF 510 and RAN performance measurement values.

Step 8 in Fig. 15: From UPF 510 5GUP protocol entity to UE 100 5GUP protocol entity: send a 5GUP Modify 5GUP session confirm (comprising sessionld, backhaul performance measurement values). The UPF 510 5GUP protocol entity confirms the 5GUP session modification request to the UE 100 5GUP protocol entity, sending also the backhaul performance measurement values in this confirmation message.

Step 9 in Fig. 15: After receiving the confirmation, the UE 100 5GUP protocol entity extracts the RAN performance measurement values.

Step 10 in Fig. 15: From UE 100 5GUP protocol entity to the application 110: send a 5GUP Get IP-QoS flows mapping (comprising GFBR unfulfilled, RAN PM, backhaul PM values). The UE 100 5GUP protocol entity exposes the GFBR unfulfilment notification information from RAN, RAN and backhaul performance measurements of the multi-connectivity (in this example MR-DC) paths to application 110, asking it to specify IP streams to QoS flows mapping on these paths.

Step 11 in Fig. 15: From the application 110 to UE 100 5GUP protocol entity: send a 5GUP proposed IP-QoS flows mapping. The application 110 sends the proposed IP streams to QoS flows mapping to UE 100 5GUP protocol entity, which converts these mappings into 5GUP operations (such as split, merge, map and duplicate). The UE 100 receives a mapping of data packets onto a second set of QoS flows from the application 110.

Step 12 in Fig. 15: From UE 100 5GUP protocol entity to SMF: send a NAS Modify PDU session request (with specified QoS flows). The UE 100 5GUP protocol entity sends a request to SMF (via UPF 510 5GUP protocol entity) to modify the established multi-connectivity (in this example MR-DC) PDU session and establish the new QoS flows based on the received mapping so that the modified PDU session carries a second set of QoS flows for the streams of data packets. The PDU session modification procedure is performed as specified in TS 23.502. After the PDU session has been successfully modified, the UE 100 5GUP protocol entity goes back from "Establishing" into "Established" state.

Step 13 in Fig. 15: From SMF to AMF: send a Nsmf_PDUSession_UpdateSMContext (comprising PDU session modification command). SMF sends a PDU session modification command to AMF, containing the list of provisioned QoS flows that AMF should forward to UE 100 5GUP protocol entity.

Step 14 in Fig. 15: From AMF to UE 100 5GUP protocol entity: send a NAS PDU session modification command (QoS flows). AMF forwards the PDU session modification command to UE 100 5GUP protocol entity.

Step 15 in Fig. 15: From UE 100 5GUP protocol entity to UPF 510 5GUP protocol entity: send a 5GUP Proposed IP-QoS flows mapping (comprising sessionld, 5GUP operations). The UE 100 5GUP protocol entity sends 5GUP operations to UPF 510 5GUP protocol entity to enforce them on the actual sent/received IP packets.

Step 16 in Fig. 15: The UPF 510 5GUP protocol entity applies the received 5GUP operations on the sent/received IP packets.

Step 17 in Fig. 15: From UPF 510 5GUP protocol entity to UE 100 5GUP protocol entity: send a 5GUP Proposed IP-QoS flows mapping applied. The UPF 510 5GUP protocol entity notifies the UE 100 5GUP protocol entity that it has applied the received IP streams to QoS flow mapping.

Step 18 in Fig. 15: The UE 100 5GUP protocol entity also applies these 5GUP operations.

Step 19 in Fig. 15: From UE 100 5GUP protocol entity to UPF 510 5GUP protocol entity: send a 5GUP session modified (comprising sessionld). The UE 100 5GUP protocol entity notifies the UPF 510 5GUP protocol entity that the 5GUP session has successfully been modified.

Step 20 in Fig. 15: The 5GUP protocol entities on the UE 100 and the UPF 510 perform the following operations in parallel:
- The UE 100 5GUP protocol entity resumes sending UL packets.
- The UPF 510 5GUP protocol entity transfers into "Established" state and resumes sending DL packets.

Step 21 in Fig. 15: From UE 100 5GUP protocol entity to the application 110: send a 5GUP MediaQoSRestored (comprising QoS flows). The UE 100 5GUP protocol entity notifies the application 110 that the PDU session with the requested QoS flows has been modified according to the mapping proposed by the application 110 by transmitting a modification notification to the application 110.

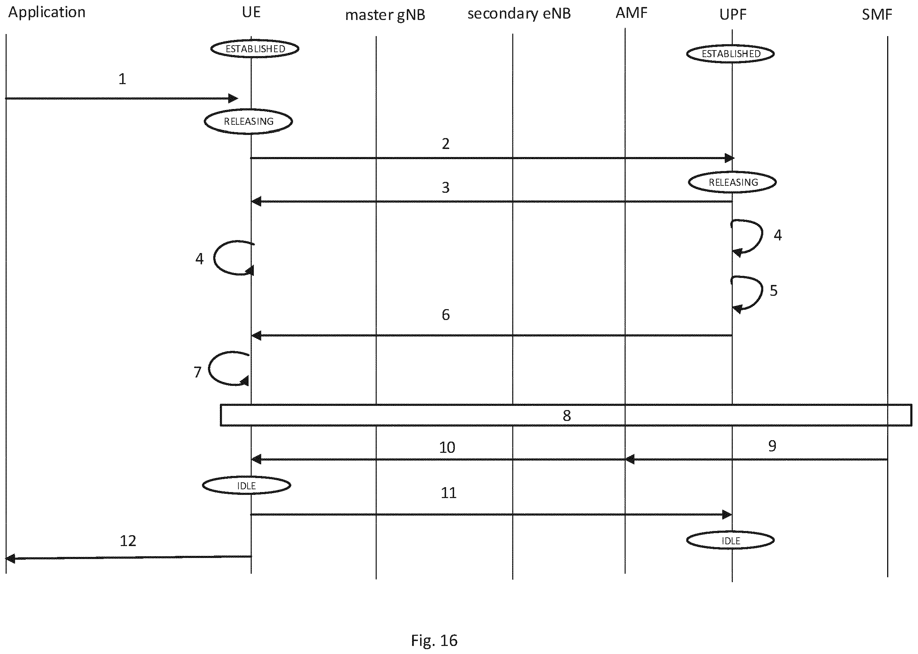

Fig. 16 shows the call flow of releasing the 5GUP session when the application 110 wants to terminate a 5GUP session. The basic steps of this implementation from the client device perspective involves: receive a third application request 124 from the application 110. The third application request 124 indicates to release the established PDU session; transmit a request to release the established PDU session to the network control node 300 based on the third application request 124 so that the established PDU session is released; transmit a release notification to the application 110.

Step 1 in Fig. 16: From the application 110 to UE 100 5GUP protocol entity: send a 5GUP TerminateMediaQoS (comprising IP streams). When the application 110 wants to terminate a 5GUP session and release its QoS requirements, it sends a TerminateMediaQoS request to UE 100 5GUP protocol entity. In other words, the UE 100 5GUP protocol entity receives a third application request from the application 110. The third application request indicates to release the established PDU session.

Step 2 in Fig. 16: From UE 100 5GUP protocol entity to UPF 510 5GUP protocol entity: send a 5GUP Release 5GUP session request (comprising sessionld). Upon receiving this request, the UE 100 5GUP protocol entity transits from "Established" to "Releasing" state and sends an in-band request to UPF 510 5GUP protocol entity to release the 5GUP session.

Step 3 in Fig. 16: From UE 100 5GUP protocol entity to UPF 510 5GUP protocol entity: send a 5GUP Release 5GUP session confirm (comprising sessionld). After receiving the in-band release 5GUP session request, the UPF 510 5GUP protocol entity also transits from "Established" to "Releasing" state and sends the confirmation response back to UE 100 5GUP protocol entity.

Step 4 in Fig. 16: The 5GUP protocol entities on the UE 100 and the UPF 510 perform the following operations in parallel:
- The UE 100 5GUP protocol entity stops sending UL packets.
- The UPF 510 5GUP protocol entity also stops sending DL packets.

Step 5 in Fig. 16: The UPF 510 5GUP protocol entity removes 5GUP operations.

Step 6 in Fig. 16: From UPF 510 5GUP protocol entity to UE 100 5GUP protocol entity: send a 5GUP operations removed. The UPF 510 5GUP protocol entity sends the in-band notification to UE 100 5GUP protocol entity that the 5GUP operations have been removed.

Step 7 in Fig. 16: Upon receiving this in-band notification, UE 100 5GUP protocol entity also removes all 5GUP operations.

Step 8 in Fig. 16: From UE 100 5GUP protocol entity to SMF: send a NAS Release (MR-DC) PDU session request. The UE 100 5GUP protocol entity sends a request to SMF (via UPF 510 5GUP protocol entity) to release the multi-connectivity (in this example MR-DC) PDU session and all its allocated QoS flows. The entire procedure is shown in TS 23.502.

Step 9 in Fig. 16: From SMF to AMF: send a Nsmf_PDUSession_UpdateSMContext (comprising PDU session release command). SMF sends a PDU session release command to AMF that AMF should forward to UE 100 5GUP protocol entity.

Step 10 in Fig. 16: From AMF to UE 100 5GUP protocol entity: send a NAS PDU session release command. AMF forwards the PDU session release command to the UE 100 5GUP protocol entity.

Step 11 in Fig. 16: From UE 100 5GUP protocol entity to UPF 510 5GUP protocol entity: send a 5GUP session released (comprising sessionld). After receiving the response that the PDU session has been released, UE 100 5GUP protocol entity goes into "Idle" state and informs the UPF 510 5GUP protocol entity that the 5GUP session has been released.

Step 12 in Fig. 16: From UE 100 5GUP protocol entity to the application 110: send a 5GUP MediaQoSTerminated. UPF 510 5GUP protocol entity goes into "Idle" state upon receiving the 5GUP release session notification from UE 100 5GUP protocol entity. UE 100 5GUP protocol entity notifies the application 110 that 5GUP session with IP stream to QoS flow mapping has been released by transmitting a release notification to the application 110.

The client device 100 herein, may be denoted as a user device, a User Equipment (UE), a mobile station, an internet of things (loT) device, a sensor device, a wireless terminal and/or a mobile terminal, is enabled to communicate wirelessly in a wireless communication system, sometimes also referred to as a cellular radio system. The UEs may further be referred to as mobile telephones, cellular telephones, computer tablets or laptops with wireless capability. The UEs in this context may be, for example, portable, pocket-storable, hand-held, computer-comprised, or vehicle-mounted mobile devices, enabled to communicate voice and/or data, via the radio access network, with another entity, such as another receiver or a server. The UE can be a Station (STA), which is any device that contains an IEEE 802.11-conformant Media Access Control (MAC) and Physical Layer (PHY) interface to the Wireless Medium (WM). The UE may also be configured for communication in 3GPP related LTE and LTE-Advanced, in WiMAX and its evolution, and in fifth generation wireless technologies, such as New Radio.

A network access node herein may also be denoted as a radio network access node, an access network access node, an access point, or a base station, e.g. a Radio Base Station (RBS), which in some networks may be referred to as transmitter, "gNB", "gNodeB", "eNB", "eNodeB", "NodeB" or "B node", depending on the technology and terminology used. The radio network access nodes may be of different classes such as e.g. macro eNodeB, home eNodeB or pico base station, based on transmission power and thereby also cell size. The radio network access node can be a Station (STA), which is any device that contains an IEEE 802.11-conformant Media Access Control (MAC) and Physical Layer (PHY) interface to the Wireless Medium (WM). The radio network access node may also be a base station corresponding to the fifth generation (5G) wireless systems.

Furthermore, any method according to implementations of the disclosure may be implemented in a computer program, having code means, which when run by processing means causes the processing means to execute the steps of the method. The computer program is included in a computer readable medium of a computer program product. The computer readable medium may comprise essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

Moreover, it is realized by the skilled person that implementations of the client device, the network access node, the network control node 300, and the UPF 510 comprise the necessary communication capabilities in the form of e.g., functions, means, units, elements, etc., for performing the solution. Examples of other such means, units, elements and functions are: processors, memory, buffers, control logic, encoders, decoders, rate matchers, de-rate matchers, mapping units, multipliers, decision units, selecting units, switches, interleavers, de-interleavers, modulators, demodulators, inputs, outputs, antennas, amplifiers, receiver units, transmitter units, DSPs, MSDs, TCM encoder, TCM decoder, power supply units, power feeders, communication interfaces, communication protocols, etc. which are suitably arranged together for performing the solution.

Especially, the processor(s) of the client device, the network access node, the network control node 300, and the UPF 510 may comprise, e.g., one or more instances of a Central Processing Unit (CPU), a processing unit, a processing circuit, a processor, an Application Specific Integrated Circuit (ASIC), a microprocessor, or other processing logic that may interpret and execute instructions. The expression "processor" may thus represent a processing circuitry comprising a plurality of processing circuits, such as, e.g., any, some or all of the ones mentioned above. The processing circuitry may further perform data processing functions for inputting, outputting, and processing of data comprising data buffering and device control functions, such as call processing control, user interface control, or the like.

The scope of protection shall be defined by the appended claims.

## Claims

1. A client device (100) for a mobile communication system (500), the client device (100) being configured to
receive a first application request (120) from an application (110), wherein the first application request (120) indicates a request to establish a packet data unit, PDU, session for transmission of streams of data packets;
receive a set of Quality-of-Service, QoS, requirements associated with the streams of data packets, wherein the set of QoS requirements is received from the application (110);
transmit a request to establish a PDU session to a network control node (300) upon reception of the first application request (120) so as to establish a PDU session served by a user plane function, UPF, (510), wherein the established PDU session carries a first set of QoS flows for the streams of data packets; and when the first set of QoS flows meets the set of QoS requirements the client device (100) is configured to
transmit the streams of data packets to the UPF (510) in the first set of QoS flows over the established PDU session via a first communication link (720) comprising a first radio link (722) and a first backhaul link (724) and at least one second communication link (730) comprising a second radio link (732) and a second backhaul link (734):
wherein the client device is further configure to:
when the first set of QoS flows does not meet the set of QoS requirements,
obtain access network, AN, performance measurements and backhaul performance measurements;
check whether the set of QoS requirements can be fulfilled by available aggregated resources on the first communication link (720) and the at least one second communication link (730) based on the AN performance measurements and the backhaul performance measurements; and
transmit a request for mapping to the application (110) when the set of QoS requirements can be fulfilled by the available aggregated resources, wherein the request for mapping comprises the AN performance measurements and the backhaul performance measurements.

2. The client device (100) according to claim 1, configured to
transmit in-band control information associated with the established PDU session to the UPF (510).

3. The client device (100) according to claim 1 or 2, wherein the application (110) is running in the client device (100) or in another client device.

4. The client device (100) according to any of the preceding claims, configured to transmit an establishment notification to the application (110).

5. The client device (100) according to any of the preceding claims, configured to
receive a unfulfillment notification from a network control node (300), wherein the unfulfillment notification indicates that at least one QoS flow in the first set of QoS flows can no longer meet at least one QoS requirement in the set of QoS requirements;
obtain AN performance measurements and backhaul performance measurements;
transmit a request for mapping to the application (110) in response to the reception of the unfulfillment notification, wherein the request for mapping comprises the unfulfillment notification, the AN performance measurements and the backhaul performance measurements.

6. The client device (100) according to any of the preceding claims, configured to
receive a second application request (122) from the application (110), wherein the second application request (122) indicates to modify the established PDU session;
obtain AN performance measurements and backhaul performance measurements;
transmit a request for mapping to the application (110) in response to the reception of the second application request (122), wherein the request for mapping comprises the AN performance measurements and the backhaul performance measurements

7. The client device (100) according to any of the preceding claims, configured to
receive a mapping of the streams of data packets onto a second set of QoS flows from the application (110) ;
transmit a request to modify the established PDU session to the network control node (300) based on the received mapping so that the modified PDU session carries a second set of QoS flows for the streams of data packets;
transmit the streams of data packets to the UPF (510) in the second set of QoS flows carried over the modified PDU session via the first communication link (720) and the at least one second communication link (730).

8. The client device (100) according to any of claims 5 to 7, configured to
receive a fulfilment notification from the network control node (300), wherein the fulfilment notification indicates that at least one QoS flow in the first set of QoS flows for which an unfulfillment notification had been previously received can meet at least one QoS requirement in the set of QoS requirements;
transmit a fulfilment notification reception to the application (110); and
when the fulfilment notification has been received before the established PDU session has been modified
request the application (110) to cancel the mapping to be used for modifying the established PDU session and instead use a previous mapping used for the established PDU session.

9. The client device (100) according to claim 8, configured to
transmit a modification notification to the application (110).

10. The client device (100) according to claim 8 or 9, wherein mapping the streams of data packets comprise
split a stream of data packets into two or more separate QoS flows, wherein each QoS flow is established on a different communication link,
aggregate a plurality of streams of data packets into a single QoS flow on a selected communication link,
match a stream of data packets into a QoS flow on a selected communication link, and
duplicate data packets of a stream of data packets into a plurality of QoS flows, wherein each QoS flow is established on a different communication link.

11. The client device (100) according to any of claims 7 to 10, configured to
transmit the mapping operation or an inverse of the mapping operation to the UPF (510).

12. A method (200) for a client device (100), the method (200) comprising
receiving (202) a first application request (120) from an application (110), wherein the first application request (120) indicates a request to establish a packet data unit, PDU, session for transmission of streams of data packets;
receiving (204) a set of Quality-of-Service, QoS, requirements associated with the streams of data packets, wherein the set of QoS requirements is received from the application (110);
transmitting (206) a request to establish the PDU session to a network control node (300) upon reception of the first application request (120) so as to establish a PDU session served by a user plane function, UPF, (510), wherein the established PDU session carries a first set of QoS flows for the streams of data packets; and
when the first set of QoS flows meets the set of QoS requirements the client device (100) is configured to
transmitting (208) the streams of data packets to the UPF (510) in the first set of QoS flows over the established PDU session via a first communication link (720) comprising a first radio link (722) and a first backhaul link (724) and at least one second communication link (730) comprising a second radio link (732) and a second backhaul link (734);
wherein the method further comprises:
when the first set of QoS flows does not meet the set of QoS requirements,
obtaining access network, AN, performance measurements and backhaul performance measurements;
checking whether the set of QoS requirements can be fulfilled by available aggregated resources on the first communication link (720) and the at least one second communication link (730) based on the AN performance measurements and the backhaul performance measurements; and
transmitting a request for mapping to the application (110) when the set of QoS requirements can be fulfilled by the available aggregated resources, wherein the request for mapping comprises the AN performance measurements and the backhaul performance measurements.

13. A computer program with a program code for performing a method according to claim 12 when the computer program runs on a computer.

## Patentansprüche

1. Client-Vorrichtung (100) für ein mobiles Kommunikationssystem (500), wobei die Client-Vorrichtung (100) zu Folgendem konfiguriert ist:
Empfangen einer ersten Anwendungsanforderung (120) von einer Anwendung (110), wobei die erste Anwendungsanforderung (120) eine Anforderung angibt, eine Paketdateneinheits-Sitzung (PDU-Sitzung) zum Senden von Strömen von Datenpaketen einzurichten;
Empfangen eines Satzes von Servicequalitätsanforderungen (QoS-Anforderungen), die mit den Strömen von Datenpaketen assoziiert sind, wobei der Satz von QoS-Anforderungen von der Anwendung (110) empfangen wird;
Senden einer Anforderung zum Einrichten einer PDU-Sitzung an einen Netzwerksteuerknoten (300) bei Empfang der ersten Anwendungsanforderung (120), um eine PDU-Sitzung einzurichten, die von einer Benutzerebenenfunktion (UPF) (510) bedient wird, wobei die eingerichtete PDU-Sitzung einen ersten Satz von QoS-Flüssen für die Ströme von Datenpaketen transportiert; und wobei, wenn der erste Satz von QoS-Flüssen den Satz von QoS-Anforderungen erfüllt, die Client-Vorrichtung (100) dazu konfiguriert ist,
die Ströme von Datenpaketen an die UPF (510) in dem ersten Satz von QoS-Flüssen über die eingerichtete PDU-Sitzung über eine erste Kommunikationsverbindung (720), die eine erste Funkverbindung (722) und eine erste Backhaul-Verbindung (724) umfasst, und mindestens eine zweite Kommunikationsverbindung (730), die eine zweite Funkverbindung (732) und eine zweite Backhaul-Verbindung (734) umfasst, zu senden,
wobei die Client-Vorrichtung ferner zu Folgendem konfiguriert ist:
wenn der erste Satz von QoS-Flüssen den Satz von QoS-Anforderungen nicht erfüllt,
Erhalten von Zugangsnetzwerksleistungsmessungen (AN-Leistungsmessungen) und Backhaul-Leistungsmessungen;
Prüfen, ob der Satz von QoS-Anforderungen durch verfügbare aggregierte Ressourcen auf der ersten Kommunikationsverbindung (720) und der mindestens einen zweiten Kommunikationsverbindung (730) basierend auf den AN-Leistungsmessungen und den Backhaul-Leistungsmessungen erfüllt werden kann; und
Senden einer Anforderung zum Zuordnen zu der Anwendung (110), wenn der Satz von QoS-Anforderungen durch die verfügbaren aggregierten Ressourcen erfüllt werden kann, wobei die Anforderung zum Zuordnen die AN-Leistungsmessungen und die Backhaul-Leistungsmessungen umfasst.

2. Client-Vorrichtung (100) nach Anspruch 1, die dazu konfiguriert ist,
Inband-Steuerinformationen, die mit der eingerichteten PDU-Sitzung assoziiert sind, an die UPF (510) zu senden.

3. Client-Vorrichtung (100) nach Anspruch 1 oder 2, wobei die Anwendung (110) auf der Client-Vorrichtung (100) oder auf einer anderen Client-Vorrichtung läuft.

4. Client-Vorrichtung (100) nach einem der vorstehenden Ansprüche, die dazu konfiguriert ist,
eine Einrichtungsmitteilung an die Anwendung (110) zu senden.

5. Client-Vorrichtung (100) nach einem der vorstehenden Ansprüche, die dazu konfiguriert ist,
eine Nichterfüllungsmitteilung von einem Netzwerksteuerknoten (300) zu empfangen, wobei die Nichterfüllungsmitteilung angibt, dass mindestens ein QoS-Fluss in dem ersten Satz von QoS-Flüssen mindestens eine QoS-Anforderung in dem Satz von QoS-Anforderungen nicht länger erfüllen kann;
AN-Leistungsmessungen und Backhaul-Leistungsmessungen zu erhalten;
als Reaktion auf den Empfang der Nichterfüllungsmitteilung eine Anforderung zum Zuordnen zu der Anwendung (110) zu senden, wobei die Anforderung zum Zuordnen die Nichterfüllungsmitteilung, die AN-Leistungsmessungen und die Backhaul-Leistungsmessungen umfasst.

6. Client-Vorrichtung (100) nach einem der vorstehenden Ansprüche, die dazu konfiguriert ist,
eine zweite Anwendungsanforderung (122) von der Anwendung (110) zu empfangen, wobei die zweite Anwendungsanforderung (122) angibt, die eingerichtete PDU-Sitzung zu modifizieren;
AN-Leistungsmessungen und Backhaul-Leistungsmessungen zu erhalten;
als Reaktion auf den Empfang der zweiten Anwendungsanforderung (122) eine Anforderung zum Zuordnen zu der Anwendung (110) zu senden, wobei die Anforderung zum Zuordnen die AN-Leistungsmessungen und die Backhaul-Leistungsmessungen umfasst.

7. Client-Vorrichtung (100) nach einem der vorstehenden Ansprüche, die dazu konfiguriert ist,
eine Zuordnung der Ströme von Datenpaketen zu einem zweiten Satz von QoS-Flüssen von der Anwendung (110) zu empfangen;
eine Anforderung zum Modifizieren der eingerichteten PDU-Sitzung an den Netzwerksteuerknoten (300) basierend auf der empfangenen Zuordnung zu senden, sodass die modifizierte PDU-Sitzung einen zweiten Satz von QoS-Flüssen für die Ströme von Datenpaketen transportiert;
Senden der Ströme von Datenpaketen an die UPF (510) in dem zweiten Satz von QoS-Flüssen, die über die modifizierte PDU-Sitzung transportiert werden, über die erste Kommunikationsverbindung (720) und die mindestens eine zweite Kommunikationsverbindung (730).

8. Client-Vorrichtung (100) nach einem der Ansprüche 5 bis 7, die dazu konfiguriert ist,
eine Erfüllungsbenachrichtigung von dem Netzwerksteuerknoten (300) zu empfangen, wobei die Erfüllungsbenachrichtigung angibt, dass mindestens ein QoS-Fluss in dem ersten Satz von QoS-Flüssen, für die zuvor eine Nichterfüllungsmitteilung empfangen wurde, mindestens eine QoS-Anforderung in dem Satz von QoS-Anforderungen erfüllen kann;
einen Erfüllungsmitteilungsempfang an die Anwendung (110) zu senden; und
wenn die Erfüllungsbenachrichtigung empfangen wurde, bevor die eingerichtete PDU-Sitzung modifiziert wurde,
anzufordern, dass die Anwendung (110) die Zuordnung aufhebt, die zum Modifizieren der eingerichteten PDU-Sitzung verwendet werden soll, und stattdessen eine vorherige Zuordnung verwendet, die für die eingerichtete PDU-Sitzung verwendet wurde.

9. Client-Vorrichtung (100) nach Anspruch 8, die dazu konfiguriert ist,
eine Modifikationsmitteilung an die Anwendung (110) zu senden.

10. Client-Vorrichtung (100) nach Anspruch 8 oder 9, wobei das Zuordnen der Ströme von Datenpaketen Folgendes umfasst:
Aufteilen eines Stroms von Datenpaketen in zwei oder mehr separate QoS-Flüsse, wobei jeder QoS-Fluss auf einer anderen Kommunikationsverbindung eingerichtet wird,
Aggregieren einer Vielzahl von Strömen von Datenpaketen zu einem einzigen QoS-Fluss auf einer ausgewählten Kommunikationsverbindung,
Abstimmen eines Stroms von Datenpaketen in einen QoS-Fluss auf einer ausgewählten Kommunikationsverbindung, und
Duplizieren von Datenpaketen eines Stroms von Datenpaketen in eine Vielzahl von QoS-Flüssen, wobei jeder QoS-Fluss auf einer anderen Kommunikationsverbindung eingerichtet wird.

11. Client-Vorrichtung (100) nach einem der Ansprüche 7 bis 10, die dazu konfiguriert ist,
den Zuordnungsvorgang oder eine Umkehrung des Zuordnungsvorgang an die UPF (510) zu senden.

12. Verfahren (200) für eine Client-Vorrichtung (100), wobei das Verfahren (200) Folgendes umfasst:
Empfangen (202) einer ersten Anwendungsanforderung (120) von einer Anwendung (110), wobei die erste Anwendungsanforderung (120) eine Anforderung angibt, eine Paketdateneinheits-Sitzung (PDU-Sitzung) zum Senden von Strömen von Datenpaketen einzurichten;
Empfangen (204) eines Satzes von Servicequalitätsanforderungen (QoS-Anforderungen), die mit den Strömen von Datenpaketen assoziiert sind, wobei der Satz von QoS-Anforderungen von der Anwendung (110) empfangen wird;
Senden (206) einer Anforderung zum Einrichten der PDU-Sitzung an einen Netzwerksteuerknoten (300) bei Empfang der ersten Anwendungsanforderung (120), um eine PDU-Sitzung einzurichten, die von einer Benutzerebenenfunktion (UPF) (510) bedient wird, wobei die eingerichtete PDU-Sitzung einen ersten Satz von QoS-Flüssen für die Ströme von Datenpaketen transportiert; und
wobei, wenn der erste Satz von QoS-Flüssen den Satz von QoS-Anforderungen erfüllt, die Client-Vorrichtung (100) dazu konfiguriert ist,
die Ströme von Datenpaketen an die UPF (510) in dem ersten Satz von QoS-Flüssen über die eingerichtete PDU-Sitzung über eine erste Kommunikationsverbindung (720), die eine erste Funkverbindung (722) und eine erste Backhaul-Verbindung (724) umfasst, und mindestens eine zweite Kommunikationsverbindung (730), die eine zweite Funkverbindung (732) und eine zweite Backhaul-Verbindung (734) umfasst, zu senden (208),
wobei das Verfahren ferner Folgendes umfasst:
wenn der erste Satz von QoS-Flüssen den Satz von QoS-Anforderungen nicht erfüllt,
Erhalten von Zugangsnetzwerksleistungsmessungen (AN-Leistungsmessungen) und Backhaul-Leistungsmessungen;
Prüfen, ob der Satz von QoS-Anforderungen durch verfügbare aggregierte Ressourcen auf der ersten Kommunikationsverbindung (720) und der mindestens einen zweiten Kommunikationsverbindung (730) basierend auf den AN-Leistungsmessungen und den Backhaul-Leistungsmessungen erfüllt werden kann; und
Senden einer Anforderung zum Zuordnen zu der Anwendung (110), wenn der Satz von QoS-Anforderungen durch die verfügbaren aggregierten Ressourcen erfüllt werden kann, wobei die Anforderung zum Zuordnen die AN-Leistungsmessungen und die Backhaul-Leistungsmessungen umfasst.

13. Computerprogramm mit einem Programmcode zum Durchführen des Verfahrens nach Anspruch 12, wenn das Computerprogramm auf einem Computer ausgeführt wird.

## Revendications

1. Dispositif client (100) pour un système de communication mobile (500), le dispositif client (100) étant configuré pour recevoir une première demande d'application (120) d'une application (110), dans lequel la première demande d'application (120) indique une demande d'établissement d'une session d'unité de données par paquets, PDU, pour la transmission de flux de paquets de données ;
recevoir un ensemble d'exigences de qualité de service, QoS, associées aux flux de paquets de données, dans lequel l'ensemble d'exigences QoS est reçu de l'application (110) ;
transmettre une demande d'établissement d'une session PDU à un nœud de commande de réseau (300) lors de la réception de la première demande d'application (120) de manière à établir une session PDU desservie par une fonction de plan utilisateur, UPF, (510), dans lequel la session PDU établie transporte un premier ensemble de flux QoS pour les flux de paquets de données ; et lorsque le premier ensemble de flux QoS satisfait à l'ensemble d'exigences QoS, le dispositif client (100) est configuré pour
transmettre les flux de paquets de données à l'UPF (510) dans le premier ensemble de flux QoS sur la session PDU établie via une première liaison de communication (720) comprenant une première liaison radio (722) et une première liaison terrestre (724) et au moins une seconde liaison de communication (730) comprenant une seconde liaison radio (732) et une seconde liaison terrestre (734) :
dans lequel le dispositif client est en outre configuré pour :
lorsque le premier ensemble de flux QoS ne satisfait pas à l'ensemble d'exigences QoS,
obtenir des mesures de performance de réseau d'accès, AN, et des mesures de performance de liaison terrestre ;
vérifier si l'ensemble d'exigences QoS peut être satisfait par les ressources agrégées disponibles sur la première liaison de communication (720) et l'au moins une seconde liaison de communication (730) sur la base des mesures de performance AN et des mesures de performance de liaison terrestre ; et
transmettre une demande de mappage à l'application (110) lorsque l'ensemble d'exigences de QoS peut être satisfait par les ressources agrégées disponibles, dans lequel la demande de mappage comprend les mesures de performance AN et les mesures de performance de liaison terrestre.

2. Dispositif client (100) selon la revendication 1, configuré pour
transmettre des informations de commande dans la bande associées à la session PDU établie à l'UPF (510).

3. Dispositif client (100) selon la revendication 1 ou 2, dans lequel l'application (110) s'exécute dans le dispositif client (100) ou dans un autre dispositif client.

4. Dispositif client (100) selon l'une quelconque des revendications précédentes, configuré pour
transmettre une notification d'établissement à l'application (110).

5. Dispositif client (100) selon l'une quelconque des revendications précédentes, configuré pour
recevoir une notification d'inexécution d'un nœud de commande de réseau (300), dans lequel la notification d'inexécution indique qu'au moins un flux QoS dans le premier ensemble de flux QoS ne peut plus satisfaire à au moins une exigence QoS dans l'ensemble d'exigences QoS ;
obtenir des mesures de performance AN et des mesures de performance de liaison terrestre ;
transmettre une demande de mappage à l'application (110) en réponse à la réception de la notification d'inexécution, dans lequel la demande de mappage comprend la notification d'inexécution, les mesures de performance AN et les mesures de performance de liaison terrestre.

6. Dispositif client (100) selon l'une quelconque des revendications précédentes, configuré pour
recevoir une seconde demande d'application (122) de l'application (110), dans lequel la seconde demande d'application (122) indique de modifier la session PDU établie ;
obtenir des mesures de performance AN et des mesures de performance de liaison terrestre ;
transmettre une demande de mappage à l'application (110) en réponse à la réception de la seconde demande d'application (122), dans lequel la demande de mappage comprend les mesures de performance AN et les mesures de performance de liaison terrestre.

7. Dispositif client (100) selon l'une quelconque des revendications précédentes, configuré pour
recevoir un mappage des flux de paquets de données sur un second ensemble de flux QoS de l'application (110) ;
transmettre une demande de modification de la session PDU établie au nœud de commande de réseau (300) sur la base du mappage reçu de sorte que la session PDU modifiée transporte un second ensemble de flux QoS pour les flux de paquets de données ;
transmettre les flux de paquets de données à l'UPF (510) dans le second ensemble de flux QoS transportés sur la session PDU modifiée via la première liaison de communication (720) et l'au moins une seconde liaison de communication (730).

8. Dispositif client (100) selon l'une quelconque des revendications 5 à 7, configuré pour
recevoir une notification d'exécution du nœud de commande de réseau (300), dans lequel la notification d'exécution indique qu'au moins un flux QoS dans le premier ensemble de flux QoS pour lequel une notification d'inexécution avait été précédemment reçue peut satisfaire à au moins une exigence QoS dans l'ensemble d'exigences QoS ;
transmettre une réception de notification d'exécution à l'application (110) ; et
lorsque la notification d'exécution a été reçue avant que la session PDU établie ait été modifiée,
demander à l'application (110) d'annuler le mappage à utiliser pour modifier la session PDU établie et d'utiliser à la place un mappage précédent utilisé pour la session PDU établie.

9. Dispositif client (100) selon la revendication 8, configuré pour
transmettre une notification de modification à l'application (110).

10. Dispositif client (100) selon la revendication 8 ou 9, dans lequel le mappage des flux de paquets de données comprend
la division d'un flux de paquets de données en deux flux QoS séparés ou plus, dans lequel chaque flux QoS est établi sur une liaison de communication différente,
l'agrégation d'une pluralité de flux de paquets de données en un flux QoS unique sur une liaison de communication sélectionnée,
la mise en correspondance d'un flux de paquets de données dans un flux QoS sur une liaison de communication sélectionnée, et
la duplication de paquets de données d'un flux de paquets de données en une pluralité de flux QoS, dans lequel chaque flux QoS est établi sur une liaison de communication différente.

11. Dispositif client (100) selon l'une quelconque des revendications 7 à 10, configuré pour
transmettre l'opération de mappage ou un inverse de l'opération de mappage à l'UPF (510).

12. Procédé (200) pour un dispositif client (100), le procédé (200) comprenant
la réception (202) d'une première demande d'application (120) d'une application (110), dans lequel la première demande d'application (120) indique une demande d'établissement d'une session d'unité de données par paquets, PDU, pour la transmission de flux de paquets de données ;
la réception (204) d'un ensemble d'exigences de qualité de service, QoS, associées aux flux de paquets de données, dans lequel l'ensemble d'exigences QoS est reçu de l'application (110) ;
la transmission (206) d'une demande d'établissement de la session PDU à un nœud de commande de réseau (300) lors de la réception de la première demande d'application (120) de manière à établir une session PDU desservie par une fonction de plan utilisateur, UPF, (510), dans lequel la session PDU établie transporte un premier ensemble de flux QoS pour les flux de paquets de données ; et
lorsque le premier ensemble de flux QoS répond à l'ensemble d'exigences QoS, le dispositif client (100) est configuré pour
transmettre (208) les flux de paquets de données à l'UPF (510) dans le premier ensemble de flux QoS sur la session PDU établie via une première liaison de communication (720) comprenant une première liaison radio (722) et une première liaison terrestre (724) et au moins une seconde liaison de communication (730) comprenant une seconde liaison radio (732) et une seconde liaison terrestre (734) ;
dans lequel le procédé comprend en outre :
lorsque le premier ensemble de flux QoS ne satisfait pas à l'ensemble d'exigences QoS,
l'obtention de mesures de performance de réseau d'accès, AN, et de mesures de performance de liaison terrestre ;
le fait de vérifier si l'ensemble d'exigences QoS peut être satisfait par les ressources agrégées disponibles sur la première liaison de communication (720) et l'au moins une seconde liaison de communication (730) sur la base des mesures de performance AN et des mesures de performance de liaison terrestre ; et
la transmission d'une demande de mappage à l'application (110) lorsque l'ensemble d'exigences QoS peut être satisfait par les ressources agrégées disponibles, dans lequel la demande de mappage comprend les mesures de performance AN et les mesures de performance de liaison terrestre.

13. Programme informatique avec un code de programme pour exécuter le procédé selon la revendication 12 lorsque le programme informatique s'exécute sur un ordinateur.
